# EUROPÄISCHE PATENTANMELDUNG

(11) **EP 4 260 700 A1**
(43) Veröffentlichungstag der Anmeldung: **18.10.2023**
(21) Anmeldenummer: 23161881.0
(22) Anmeldetag: 14.03.2023
(51) Int. Cl.: A01M 7/00

(54) **LANDWIRTSCHAFTLICHE VERTEILMASCHINE MIT EINEM VERTEILGESTÄNGE UND VERFAHREN ZUR LAGESTEUERUNG DES VERTEILGESTÄNGES**

(30) Priorität: 13.04.2022 DE 102022109091
(71) Anmelder: HORSCH LEEB Application Systems GmbH, 94405 Landau an der Isar (DE)
(72) Erfinder: Zink, Florian, 94405 Landau an der Isar (DE)
(74) Vertreter: v. Bezold & Partner Patentanwälte - PartG mbB

(57) **Zusammenfassung**

Die Erfindung betrifft eine landwirtschaftliche Verteilmaschine, vorzugsweise eine Feldspritze oder einen pneumatischen Düngerstreuer, mit einem Verteilgestänge zum Ausbringen von Material, wie Düngemittel, Pflanzenschutzmittel oder Saatgut, aufweisend zwei seitliche Ausleger, die jeweils eine Mehrzahl von Ausbringelementen zum Ausbringen des Materials aufweisen. Die Erfindung betrifft ferner ein Verfahren zur Lagesteuerung eines solchen Verteilgestänges. Die Verteilmaschine (1) umfasst ferner eine ansteuerbare Stelleinrichtung zur Veränderung einer Lage des Verteilgestänges (2) relativ zu einer zu bearbeitenden landwirtschaftlichen Zielfläche (Z). Die Verteilmaschine (1) umfasst ferner eine Sensoreinrichtung (10), die dazu ausgebildet ist, sich ändernde Höhenabstände (h) des Verteilgestänges (2) zu der Zielfläche (Z) und/oder vorausliegende Konturänderungen der Zielfläche vorausschauend zu erfassen und vorzugsweise den Höhenabstand (h) des Verteilgestänges zu der Zielfläche (Z) an unterschiedlichen Messstellen (M1, M2), die in Fahrtrichtung (V) voneinander beabstandet sind, zu erfassen. Die Verteilmaschine (1) umfasst ferner eine Steuereinrichtung (20), die dazu ausgebildet ist, zur Lagesteuerung, vorzugsweise zur Höhensteuerung, des Verteilgestänges (2) Stellsignale (31) für die Stelleinrichtung (30) abhängig von den vorausschauend erfassten, sich ändernden Höhenabständen (h) zu erzeugen, vorzugsweise um eine Reaktionszeit bei der Lagesteuerung zumindest teilweise zu kompensieren.

## Beschreibung

Die Erfindung betrifft eine landwirtschaftliche Verteilmaschine, vorzugsweise eine Feldspritze oder einen pneumatischen Düngerstreuer, mit einem Verteilgestänge hoher Arbeitsbreite zum Ausbringen von Material, wie Düngemittel, Pflanzenschutzmittel oder Saatgut. Die Erfindung betrifft ferner ein Verfahren zur Lagesteuerung eines solchen Verteilgestänges.

Aus dem Stand der Technik ist es bekannt, derartige landwirtschaftliche Verteilmaschinen (nachfolgend auch kurz als Verteilmaschinen bezeichnet) für die gleichmäßige Verteilung flüssiger und/ oder fester landwirtschaftlicher Wirkstoffe auf eine zu behandelnde landwirtschaftliche Fläche zu verwenden. Derartige Verteilmaschinen weisen zur Erreichung einer möglichst großen Schlagkraft ein sich in großer Breite quer zu einer Fahrtrichtung der Verteilmaschine ersteckendes Verteilgestänge auf. Zur Verteilung der jeweiligen Wirkstoffe sind am Verteilgestänge Verteilelemente wie z. B. Spritzdüsen, Prallelemente oder dergl. angebracht.

Beim Ausbringen soll der Abstand zwischen dem Verteilgestänge und dem Feldboden oder dem Pflanzenbestand über die gesamte Arbeitsbreite möglichst konstant bleiben. Zur Lagesteuerung des Verteilgestänges, insbesondere zur Höhenverstellung gegenüber einem Pflanzenbestand, ist aus dem Stand der Technik bekannt, das Verteilgestänge mittels einer Stelleinrichtung höhenverstellbar am Trägerfahrzeug zu haltern. Ferner sind Stelleinrichtungen bekannt, um eine Schwenklage des Verteilgestänges um eine in Fahrtrichtung verlaufende Schwenkachse einzustellen oder um eine Anwinkelung der Ausleger zueinander oder von Auslegersegmenten zueinander einzustellen.

Zur Erfassung der Höhenlage im Rahmen der Lagesteuerung des Verteilgestänges ist es aus dem Stand der Technik ferner bekannt, am Verteilgestänge in Richtung zum Pflanzenbestand orientierte, d. h. im Wesentlichen senkrecht nach unten gerichtete, Ultraschallsensoren vorzusehen, mit denen ein Ist-Abstand des Verteilgestänges zum Pflanzenbestand bzw. zur Ackerfläche erfasst werden kann.

Bekannte Systeme zur Lagesteuerung des Verteilgestänges, die solche Ultraschallsensoren verwenden, haben jedoch den Nachteil, dass die Lagesteuerung des Gestänges oftmals zu spät auf sich ändernde Höhenabstände zwischen Verteilgestänge und Pflanzenbestand reagieren kann. Der Grund ist die vergleichsweise lange Systemreaktionszeit, d. h. die Zeit, die zwischen einer Erfassung der Höhenlage und einer tatsächlichen Anpassung, d. h. einer Veränderung der Lage des Verteilgestänges vergeht. Diese Reaktionszeit wird beispielsweise beeinflusst durch die vergleichsweise hohe Massenträgheit des Gestänges, die Reaktionszeit der Stelleinrichtung, z. B. einer Hydraulik hiervon, und der Verarbeitungszeit der Sensordaten.

Nimmt man hierfür lediglich beispielhaft eine Reaktionszeit von 1,2 s an, ergäbe sich bezogen auf eine Fahrgeschwindigkeit von z. B. 18km/h = 5 m/s somit eine Fahrstrecke von sechs Metern, bis die Regelung zur Erreichung der gewünschten Höhenlage beginnt bzw. bis diese Höhenlage erreicht wird. Die Anpassung erfolgt somit zu spät. Ferner kann sich innerhalb dieser sechs Meter Fahrstrecke die Höhenlage jedoch bereits wieder ändern, so dass im Ergebnis keine ausreichend genaue Anpassung der Lage des Verteilgestänges an sich ändernde Höhenabstände möglich ist.

Es ist somit eine Aufgabe der Erfindung, eine verbesserte Technik zur Lagesteuerung des Verteilgestänges zur Anpassung an sich verändernde Höhenabstände zu einem Pflanzenbestand oder einer Ackerfläche bereitzustellen, mit der Nachteile herkömmlicher Techniken vermieden werden können. Die Aufgabe der Erfindung ist es insbesondere, eine Technik zur Lagesteuerung des Verteilgestänges bereitzustellen, die eine schnellere Anpassung der Lage des Verteilgestänges an sich verändernde Höhenabstände ermöglicht.

Diese Aufgaben werden durch Vorrichtungen und Verfahren mit den Merkmalen der unabhängigen Ansprüche gelöst. Vorteilhafte Weiterbildungen sind in den abhängigen Ansprüchen und der Beschreibung angegeben.

Gemäß einem ersten allgemeinen Gesichtspunkt wird eine landwirtschaftliche Verteilmaschine bereitgestellt. Die Verteilmaschine umfasst ein Verteilgestänge zum Ausbringen von Material, wie Düngemittel, Pflanzenschutzmittel oder Saatgut. Das Verteilgestänge, nachfolgend auch kurz als Gestänge bezeichnet, umfasst zwei seitliche Ausleger (Gestängeflügel), die jeweils eine Mehrzahl von Ausbringelementen zum Ausbringen des Materials aufweisen. Das Verteilgestänge umfasst vorzugsweise ferner ein Mittelteil, an dem die seitlichen Ausleger jeweils um eine in Fahrtrichtung verlaufende Achse (Auslegerachse) verschwenkbar am Mittelteil gehaltert sind. Das Mittelteil kann ebenfalls eine Mehrzahl von Ausbringelementen zum Ausbringen des Materials aufweisen.

Die Verteilmaschine kann eine Feldspritze sein, bei der die Ausbringelemente als Spritzdüsen ausgeführt sind. Die Verteilmaschine kann ferner ein pneumatischer Düngerstreuer sein, bei dem körniges Streugut entlang von Verteilleitungen, die zumindest abschnittsweise am Verteilgestänge angeordnet sind, mittels eines Luftvolumenstroms in Richtung der Ausbringelemente förderbar ist. Das Ausbringelement kann in diesem Fall z. B. einen Prallteller aufweisen.

Die Verteilmaschine umfasst ferner eine ansteuerbare Stelleinrichtung zur Veränderung einer Lage des Verteilgestänges relativ zu einer zu bearbeitenden landwirtschaftlichen Zielfläche.

Die Verteilmaschine umfasst ferner eine Sensoreinrichtung, die dazu ausgebildet ist, sich ändernde Höhenabstände des Verteilgestänges zu der Zielfläche und/oder vorausliegende Konturänderungen der Zielfläche vorausschauend zu erfassen, vorzugsweise sich ändernde Höhenabstände des Verteilgestänges in Fahrtrichtung zu der Zielfläche und/oder sich ändernde Bodenreliefs vorausschauend zu erfassen. Anders ausgedrückt ist die Sensoreinrichtung dazu ausgebildet, in Bezug auf das Verteilgestänge in Fahrtrichtung vorausliegende Änderungen eines Höhenabstands des Verteilgestänges zur Zielfläche direkt zu erfassen und/oder anhand vorausliegender Konturänderungen der Zielfläche zu erfassen, d. h. vorausliegende Änderungen eines Höhenabstands und/oder einer Kontur der Zielfläche, z. B. eines Bodenreliefs, zu prognostizieren, bevor das Verteilgestänge diese erreicht.

Die Verteilmaschine umfasst ferner eine Steuereinrichtung, die dazu ausgebildet ist, zur Lagesteuerung des Verteilgestänges Stellsignale für die Stelleinrichtung abhängig von den vorausschauend erfassten, sich ändernden Höhenabständen zu erzeugen, vorzugsweise um eine Reaktionszeit bei der Lagesteuerung zumindest teilweise zu kompensieren.

Unter einer Reaktionszeit bei der Lagesteuerung kann die technisch bedingte Verzögerungszeit verstanden werden, die zwischen der sensorischen Erfassung eines sich ändernden Höhenabstands (h) und/oder einer Konturänderung und einer Anpassung der Lage des Verteilgestänges an die geänderte Höhenlage vergeht.

Vorstehend wurde bereits erwähnt, dass die Reaktionszeit vorliegend beispielsweise beeinflusst wird durch die Verarbeitungszeit der Sensordaten, die Reaktionszeit der Stelleinrichtung, z. B. eine diesbzgl. Reaktionszeit der Hydraulik bei hydraulischen Stelleinrichtungen, und die Massenträgheit des Verteilgestänges. Durch die vorausschauende Erfassung von sich ändernden Höhenabständen kann die Steuereinrichtung Stellsignale zur Anpassung an diese sich ändernden Höhenabstände erzeugen, bevor das Verteilgestänge einen geänderten Höhenabstand erreicht. Entsprechend kann die Reaktionszeit für diese Anpassung zumindest teilweise, vorzugsweise vollständig, kompensiert werden. Vorteilhaft kann erfindungsgemäß eine schnellere Anpassung der Lage des Verteilgestänges an sich verändernde Höhenabstände erzielt werden.

Die Zielfläche kann eine zu behandelnde landwirtschaftliche Fläche sein. Die Zielfläche kann eine Bestandsfläche, z. B. eines Pflanzenbestands, oder eine Ackerfläche sein. Der Höhenabstand kann der Abstand einer Unterseite des Verteilgestänges zu einer Oberseite eines Pflanzenbestands sein. Die Lagesteuerung des Verteilgestänges kann eine Höhensteuerung des Verteilgestänges gegenüber der Zielfläche sein.

In einer weiteren bevorzugten Ausführungsform ist die Sensoreinrichtung dazu ausgebildet, den Höhenabstand des Verteilgestänges zu der Zielfläche an unterschiedlichen Messstellen, die in Fahrtrichtung voneinander beabstandet sind, zu erfassen. Die unterschiedlichen Messstellen können - in Fahrtrichtung gesehen - zumindest zum Teil mehrere Meter vor dem Verteilgestänge liegen. Eine Messstelle kann auch direkt unterhalb oder schräg unterhalb des Verteilgestänges liegen. D.h. es kann auch nur eine der Messstelle zur vorausschauenden Erfassung von sich ändernden Höhenabständen und/oder Konturänderungen verwendet werden und die andere zur Ist-Erfassung des Höhenabstands und/oder der Ist-Kontur.

Die unterschiedlichen Messstellen, die in Fahrtrichtung voneinander beabstandet sind, können - in Fahrtrichtung gesehen, auf einer Linie liegen oder quer zur Fahrtrichtung zueinander versetzt sein. Dies kann vorteilhaft beispielsweise im Hinblick auf Dammkulturen sein, d.h. wenn beispielsweise die Dämme eine andere Höhe aufweisen.

Eine Messstelle stellt einen Messpunkt und/oder einen Messbereich dar, an der/dem eine Kontur der Zielfläche, ein Höhenabstand der Zielfläche zum Verteilgestänge und/oder eine Änderung dieses Höhenabstands abgetastet wird. Unter der Kontur kann ein Höhenprofil verstanden werden. Die unterschiedlichen Messstellen können auch mehrere Messstellen umfassen, die - in Längserstreckungsrichtung des Verteilgestänges gesehen - beabstandet voneinander angeordnet sind und jeweils den gleichen Abstand - in Fahrtrichtung gesehen - zum Verteilgestänge aufweisen.

In einer besonders bevorzugten Ausführungsform kann die Sensoreinrichtung ferner dazu ausgebildet sein, Ist-Werte zum Höhenabstand des Verteilgestänges zur Zielfläche zu erfassen. Die Ist-Werte geben den aktuellen Höhenabstand (Ist-Höhenabstand) des Verteilgestänges zur Zielfläche an.

In einer Ausführungsform ist die Sensoreinrichtung dazu ausgebildet, den Höhenabstand des Verteilgestänges zu der Zielfläche an einer ersten Messstelle zur Erfassung von Ist-Werten zum Höhenabstand und an einer zweiten Messstelle zur Erfassung von vorausliegenden Werten zum Höhenabstand zu erfassen, wobei die zweite Messstelle - in Fahrtrichtung gesehen - zumindest teilweise vor der ersten Messstelle liegt, weiter vorzugsweise mehrere Meter beabstandet vor der ersten Messstelle liegt. Alternativ oder zusätzlich kann die Sensoreinrichtung dazu ausgebildet sein, eine Kontur der Zielfläche an einer ersten Messstelle und an einer zweiten Messstelle abzutasten, wobei die zweite Messstelle - in Fahrtrichtung gesehen - zumindest teilweise vor der ersten Messstelle liegt, weiter vorzugsweise mehrere Meter beabstandet vor der ersten Messstelle liegt.

Diese Ausführungsformen nutzen die Erkenntnis, dass Höhenabstandsdaten an der ersten Messstelle genauer, aber zur Kompensation der Reaktionszeit zu spät erfasst werden, dagegen Höhenabstandsdaten an der zweiten Messstelle im Vergleich hierzu weniger genau, dafür aber vorausschauend erfasst werden können, so dass frühzeitig auf sich verändernde Höhenabstandsdaten reagiert werden kann. Die Nutzung von Höhenabstandsdaten von beiden Messstellen ermöglicht in Kombination eine schnelle und besonders genaue Lagesteuerung des Verteilgestänges in Reaktion auf sich verändernde Höhenabstände des Verteilgestänges zur Zielfläche.

Die Steuereinrichtung ist in einer bevorzugten Ausführungsform dazu ausgebildet, anhand der Ist-Werte die vorausschauend erfassten, sich ändernden Höhenabstände zu überprüfen und/oder zu kalibrieren. Alternativ oder zusätzlich kann die Steuereinrichtung dazu ausgebildet sein, anhand der Ist-Werte einen aktuellen Höhenabstand des Verteilgestänges auf einen Soll-Höhenabstand einzuregeln, insbesondere nachzuregeln, wobei der aktuelle Höhenabstand zuvor anhand der vorausschauend erfassten, sich ändernden Höhenabstände eingestellt wurde, z. B. im Rahmen einer Vorsteuerung.

Die unbestimmten Artikel "ein", "eine" bzw. deren Deklinationen schließen eine Mehrzahl der damit bezeichneten Merkmale nicht aus. So sind sowohl die bisherigen als auch die folgenden Angaben mit "ein" bzw. "eine" als "mindestens ein" bzw. "mindestens eine" zu verstehen. Speziell kann die Sensoreinrichtung in einer weiteren Ausführungsvariante dazu ausgebildet sein, Messwerte an mehreren solcher ersten und zweiten Messstellen zu erfassen. Hierbei sind die mehreren ersten Messstellen jeweils - in Längserstreckungsrichtung des Verteilgestänges gesehen - beabstandet voneinander angeordnet und weisen jeweils den gleichen - in Fahrtrichtung gesehen - Abstand zum Verteilgestänge auf (bei Annahme einer horizontalen Zielfläche). Entsprechendes gilt für die mehreren zweiten Messstellen, die jedoch - in Fahrtrichtung gesehen - zumindest teilweise vor den ersten Messstellen liegen.

Die Sensoreinrichtung kann beispielsweise mehrere Paare von ersten und zweiten Messstellen ausbilden, wobei die jeweils aus einer ersten und zweiten Messstelle gebildeten Paare, in Längserstreckungsrichtung des Verteilgestänges gesehen, beabstandet voneinander angeordnet sind. Hierzu kann die Sensoreinrichtung mehrere Sensoranordnungen oder Sensoren umfassen, die, in Längserstreckungsrichtung des Verteilgestänges gesehen, entsprechend beabstandet am Verteilgestänge angeordnet sind. Dies ist vorteilhaft, um vorausliegende Höhenänderungen an mehreren Stellen entlang der Arbeitsbreite der Verteilmaschine vorausschauend zu erfassen. Diese Sensoranordnungen können jeweils einen Nahbereich-Sensor und einen Fernbereich-Sensor umfassen, wie sie nachfolgend noch beschrieben werden. Es können entlang des Verteilgestänges verteilt somit mehrere Paare aus jeweils einem Nahbereich-Sensor und einen Fernbereich-Sensor vorgesehen sein.

Es wird betont, dass es für die vorstehend beschriebenen Ausführungsvarianten nicht notwendig ist, die Reaktionszeit zur Lagesteuerung des Verteilgestänges zu kennen und/oder in der Steuereinrichtung zu hinterlegen. So lange sich ändernde Höhenabstände anhand der zweiten Messstelle(n) vorausschauend erfasst werden, kann durch eine vorausschauende Anpassung der Gestängelage die Reaktionszeit zumindest teilweise kompensiert werden, unabhängig davon, wie groß diese ist. Je weiter vorausschauend die sich ändernden Höhenabstände erfasst werden, desto mehr kann die Reaktionszeit kompensiert werden.

Vorzugsweise ist die Steuereinrichtung dazu ausgebildet, mittelbar oder unmittelbar einen Zeitpunkt für die Erzeugung eines Stellsignals zur zumindest teilweisen Kompensation der Reaktionszeit bei der Lagesteuerung in Abhängigkeit von der Fahrgeschwindigkeit und/oder einer hiervon abgeleiteten Größe, wie z. B. der Gestängegeschwindigkeit an einer bestimmten Stelle des Verteilgestänges, in Fahrtrichtung festzulegen, vorzugsweise derart, dass eine nach dem Zeitpunkt verbleibende Fahrzeit bis zum Erreichen des vorausschauend erfassten, sich ändernden Höhenabstands und/oder Konturänderungen und/oder bis zum Erreichen der zweiten Messstelle im Wesentlichen der Reaktionszeit der Stelleinrichtung bei der Lagesteuerung entspricht.

Dies ist besonders vorteilhaft, da in diesem Fall die Gestängelage an eine vorausliegende Höhenabstandsänderung im Wesentlichen genau dann angepasst ist, wenn das Verteilgestänge die Höhenabstandsänderung überfährt, so dass die Höhenabstandsänderung nicht zu spät und nicht zu früh eingestellt wird. Zur Umsetzung kann experimentell die Reaktionszeit der Stelleinrichtung, die einen Großteil der Gesamtreaktionszeit benötigt, vorab in Versuchen für die spezifische Art der Gestängesteuerung und die spezifische Ausführung der Verteilmaschine bestimmt werden und die Lage der zweiten Messstelle und/oder der Zeitpunkt für die Erzeugung des Stellsignals entsprechend zweckmäßig festgelegt werden. Die Reaktionszeit kann beispielsweise auch während des Arbeitsvorgangs der Verteilmaschine gemessen werden, beispielsweise als Zeit, die zwischen einer Signalerfassung der Sensoreinrichtung und der in Reaktion hierauf von der Steuereinrichtung erzeugten Bewegung des Verteilgestänges vergeht.

In einer weiteren bevorzugten Ausführungsform entspricht die erste Messstelle einem Nahbereich unterhalb oder schräg unten vor dem Verteilgestänge. Schräg unten vor dem Verteilgestänge bedeutet in Fahrtrichtung gesehen schräg unten vor dem Verteilgestänge. Alternativ oder zusätzlich kann die erste Messstelle Messpunkte aus einem Bereich umfassen, der - in Fahrtrichtung gesehen - einen Abstand vom Verteilgestänge aufweist, der in einem Bereich von null bis einem Meter liegt. Die zweite Messstelle kann einem Fernbereich entsprechen, der - in Fahrtrichtung gesehen - vor oder zumindest größtenteils vor dem Nahbereich liegt. Alternativ oder zusätzlich kann die zweite Messstelle Messpunkte aus einem Bereich umfassen, der - in Fahrtrichtung gesehen - einen Abstand vom Verteilgestänge aufweist, der in einem Bereich von einem bis x Metern liegt. X kann hierbei z. B. einen Wert von 50 Metern, 20 Metern, 10 Metern oder 6 Metern aufweisen. Derartige Nah- und Fernbereiche sind besonders im Hinblick auf typische Fahrgeschwindigkeiten und übliche Reaktionszeiten von Verteilmaschinen vorteilhaft. Der Abstand der ersten Messstelle und/oder der zweiten Messstelle zum Verteilgestänge - in Fahrtrichtung gesehen, kann optional auch dynamisch veränderbar sein. Beispielsweise kann ein Sensor zur Veränderung des Abstands schwenkbar am Verteilgestänge angeordnet sein.

Nachfolgend werden vorteilhafte Ausführungsformen der Sensoreinrichtung beschrieben, um die vorstehenden Messwerte an den ersten und zweiten Messstellen zu erfassen.

In einer besonders bevorzugten Ausführungsform umfasst die Sensoreinrichtung einen ersten Sensor, nachfolgend als Nahbereich-Sensor bezeichnet, der dazu ausgebildet ist, an einer ersten Messstelle Ist-Werte zum Höhenabstand des Verteilgestänges zur Zielfläche zu erfassen und/oder eine Ist-Kontur, z.B. ein Ist-Höhenprofil, der Zielfläche abzutasten. Gemäß dieser Ausführungsform umfasst die Sensoreinrichtung einen zweiten Sensor, nachfolgend als Fernbereich-Sensor bezeichnet, der dazu ausgebildet ist, an einer zweiten Messstelle vorausliegende Werte zum Höhenabstand zu erfassen und/oder eine vorausliegende Kontur, z. B. ein vorausliegendes Höhenprofil, der Zielfläche abzutasten, wobei die zweite Messstelle - in Fahrtrichtung gesehen - zumindest teilweise vor der ersten Messstelle liegt. Mit dieser Sensoranordnung können sowohl Ist-Werte als auch vorausliegende Werte zum Höhenabstand erfasst werden.

Der Nahbereich-Sensor und/oder der Fernbereich-Sensor können jeweils als Ultraschallsensor ausgeführt sein. Jedoch sind auch andere Sensorarten zur Abstandsmessung möglich. Beispielsweise kann der Fernbereich-Sensor als Radarsensor ausgeführt sein.

Der Nahbereich-Sensor und/oder der Fernbereich-Sensor können am Verteilgestänge angeordnet sein. Dies ermöglicht eine direkte Erfassung des Höhenabstands des Verteilgestänges zur Zielfläche. Besonders vorteilhaft ist eine Anordnung, bei der der Nahbereich-Sensor und der Fernbereich-Sensor an der gleichen Stelle am Verteilgestänge angeordnet sind, beispielsweise an der gleichen Stelle übereinander oder nebeneinander angeordnet sind. Dies ermöglicht einen einfacheren Vergleich der Messdaten der beiden Sensoren.

Der Fernbereich-Sensor kann eine im Vergleich zum Nahbereich-Sensor weiter nach vorne auf die Zielfläche orientierte Blickrichtung aufweisen. Nach vorne bedeutet vom Verteilgestänge aus in Richtung Fahrtrichtung blickend. Der Nahbereich-Sensor kann eine nach unten oder schräg nach unten orientierte Blickrichtung aufweisen, die einen Winkel zu einer Vertikalen bildet, der im Bereich von 0° bis 60°, vorzugsweise von 0° bis 20° liegt. Der Nahbereich-Sensor kann also direkt senkrecht nach unten oder leicht nach vorne bzw. schräg nach unten in Fahrtrichtung schauen. Der Fernbereich-Sensor kann eine schräg nach vorne orientierte Blickrichtung aufweisen, die im Vergleich zur Blickrichtung des Nahbereich-Sensors weiter nach vorne gerichtet ist. Die Blickrichtung des Fernbereich-Sensors kann einen Winkel zu einer Vertikalen bilden, der in einem Bereich von 5° und 90° oder in einem Bereich von 15° bis 70 zur Vertikalen liegt.

Gemäß einer weiteren Ausführungsform ist die Steuereinrichtung dazu ausgebildet, Messdaten des Fernbereich-Sensors zu einem Zeitpunkt t anhand von Messdaten des Nahbereich-Sensors, vorzugsweise Messdaten zu einem Zeitpunkt t+x zu überprüfen und vorzugsweise zu kalibrieren, wobei t+x der Zeit entspricht, zu der die erste Messstelle (M1) die Lage der zweiten Messstelle (M2) im aktuellen Fahrbetrieb erreicht. x entspricht also der Fahrzeit des Verteilgestänges von der ersten zur zweiten Messstelle. Der Fernbereich-Sensor misst ungenauer, da er im Vergleich zum Nahbereich-Sensor einen flacheren Messwinkel aufweist. Diese Ausführungsform ermöglicht eine Überprüfung der Qualität der Messwerte des Fernbereich-Sensors, was zu dessen Kalibrierung auch im laufenden Betrieb der Verteilmaschine vorteilhaft genutzt werden kann.

Beispielsweise kann die Steuereinrichtung dazu ausgebildet sein, falls die Überprüfung eine Abweichung eines mittels der Messdaten des Fernbereich-Sensors zum Zeitpunkt t ermittelten Höhenabstands zu einem mittels der Messdaten des Nahbereich-Sensors zum Zeitpunkt t+x ermittelten Höhenabstand ergibt, diese Abweichung als Offset oder als Korrekturwert für die Messdaten des Fernbereich-Sensors einzustellen und vorzugsweise den Korrekturwert fortlaufend anzupassen. Die Genauigkeit der vorausschauenden Erfassung von Höhenänderungen kann hierdurch verbessert werden.

In einer weiteren bevorzugten Ausführungsform kann der Fernbereich-Sensor zur Umfelderkennung ausgebildet sein, vorzugsweise zur Erkennung von Hindernissen und/oder Feldgrenzen ausgebildet sein. Gemäß dieser Ausführungsform kann der Fernbereich-Sensor in einer Doppelfunktion genutzt werden. Für diese Ausführungsform ist es besonders vorteilhaft, wenn der Fernbereich-Sensor als Radarsensor ausgebildet ist. Der Radarsensor kann z. B. dazu ausgebildet sein, zusätzlich zur Zielfläche an der zweiten Messstelle einen zusätzlichen vorausliegenden Bereich zu erfassen, um z. B. Hindernisse, wie Bäume, oder Feldgrenzen miterfassen zu können.

In einer weiteren bevorzugten Ausführungsform kann eine Blickrichtung des Fernbereich-Sensors zur Veränderung der Lage der zweiten Messstelle oder zur Auswahl einer anderen Messstelle als zweite Messstelle veränderbar sein, vorzugsweise automatisiert veränderbar sein.

Vorzugsweise ist die Steuereinrichtung dazu ausgebildet, die Blickrichtung des Fernbereich-Sensors abhängig von der Fahrgeschwindigkeit oder einer hiervon abgeleiteten Größe zu verändern, derart, dass die Blickrichtung mit zunehmender Fahrgeschwindigkeit weiter nach vorne verändert wird. Vorteilhaft kann hierdurch dem Effekt, dass mit zunehmender Fahrgeschwindigkeit weniger Zeit bleibt, um auf vorausliegende, sich ändernde Höhenabstände zu reagieren, entgegengewirkt werden.

Besonders vorteilhaft ist, wenn die hiervon abgeleitete Größe die Gestängegeschwindigkeit in Fahrtrichtung an einer vorbestimmten Stelle des Verteilgestänges ist. Die Gestängegeschwindigkeit hängt von der Fahrgeschwindigkeit ab. Bei Kurvenfahrten ergeben sich jedoch unterschiedliche Gestängegeschwindigkeiten entlang des Verteilgestänges. So ist die Gestängegeschwindigkeit des Auslegers, der in Bezug auf die Kurvenfahrt radial außen liegt, höher als die Gestängegeschwindigkeit des radial innen liegenden Ausliegers. Entsprechendes ergeben sich bei Kurvenfahrten auch entlang der Ausleger bzw. deren unterschiedlichen Segmente unterschiedliche Gestängegeschwindigkeiten in Fahrtrichtung.

Besonders bevorzugt ist somit eine Ausführungsform, bei der die Blickrichtung des Fernbereich-Sensors jeweils abhängig von der Gestängegeschwindigkeit des Verteilgestänges verändert wird, insbesondere der Geschwindigkeit des Verteilgestänges in Fahrtrichtung an der Stelle, an der der jeweilige Fernbereich-Sensor am Gestänge angeordnet ist. Diese Ausführungsform ist besonders vorteilhaft, wenn die Sensoreinrichtung mehrere Fernbereich-Sensoren umfasst, wobei an jedem Ausleger mindestens ein Fernbereich-Sensor angeordnet ist.

In einer weiteren bevorzugten Ausführungsvariante kann die Steuereinrichtung dazu ausgebildet sein, die Blickrichtung des Fernbereich-Sensors dynamisch auf eine vorausliegende Messstelle zu richten, die so vom Verteilgestänge vorausliegend beabstandet ist, dass eine auf Basis der aktuellen Fahrgeschwindigkeit benötigte Fahrzeit bis zum Erreichen dieser Messstelle durch das Verteilgestänge im Wesentlichen der Reaktionszeit oder einer hiervon abgeleiteten Größe entspricht.

Vorteilhaft kann in diesem Fall die Gestängelage an eine vorausliegende Höhenabstandsänderung zur Zielfläche im Wesentlichen genau dann eingestellt sein, wenn das Verteilgestänge die Höhenänderung überfährt, so dass die Höhenänderung nicht zu spät (und nicht zu früh) eingestellt wird.

Gemäß einem weiteren Ausführungsbeispiel kann der Fernbereich-Sensor zur Veränderung der Blickrichtung schwenkbar am Verteilgestänge angeordnet sein. Besonders vorteilhaft ist eine Ausführung als Ultraschall-Sensor, der verschwenkbar am Verteilgestänge angeordnet ist und weiter vorzugsweise von der Steuereinrichtung zur Veränderung seiner Schwenklage und damit Blickrichtung ansteuerbar ist. Die Verschwenkung kann manuell oder durch einen entsprechend von der Steuereinrichtung ansteuerbaren Aktor erfolgen, der z. B. elektrisch betätigbar ist. In diesem Fall ist es auch möglich, dass kein Nahbereich-Sensor vorgesehen ist.

Alternativ oder zusätzlich kann die Sensoreinrichtung einen Radarsensor umfassen, der dazu ausgebildet ist, den Höhenabstand des Verteilgestänges zur Zielfläche an mehreren Messstellen, die in Fahrtrichtung voneinander beabstandet sind, zu messen. Der Vorteil eines Radarsensors ist, dass die Zielfläche an mehrere Messstellen gleichzeitig abgetastet werden kann. Der Radarsensor kann somit die Funktion eines Nahbereich-Sensors und eines Fernbereich-Sensors kombinieren und/oder in einem Sensor bzw. Gerät vereinen.

Weiter kann die Steuereinrichtung optional dazu ausgebildet sein, abhängig von der Fahrgeschwindigkeit oder einer hiervon abgeleiteten Größe aus den mehreren Messstellen des Radarsensors eine Messstelle oder mehrere Messstellen auszuwählen. Diese Auswahl kann vorzugsweise derart erfolgen, dass mit zunehmender Fahrgeschwindigkeit eine oder mehrere in Fahrtrichtung weitere vorne liegende Messstelle(n) ausgewählt werden. Anders ausgedrückt werden die für die Berechnung des vorausliegenden sich ändernden Höhenabstands oder der vorausliegenden Konturänderung zur Zielfläche herangezogenen Messpunkte des Radarsensors angepasst, so dass z.B. je nach Fahrgeschwindigkeit Messpunkte mit unterschiedlichen weit vorausliegenden Abständen zum Verteilgestänge ausgewählt werden.

Diese Auswahl einer oder mehrere Messstelle(n) kann als eine Veränderung der Blickrichtung des Radarsensors abhängig von der Fahrgeschwindigkeit oder einer hiervon abgeleiteten Größe angesehen werden. Zwar muss der Radarsensor hierzu selbst nicht verschwenkt werden, wie z. B. ein Ultraschallsensor, aber aus den mehreren verfügbaren Messstellen kann eine Geeignete ausgewählt werden, so dass nur die Radarsignale dieser Messstelle in Bezug auf die Erfassung von Höhenabstandsänderungen ausgewertet werden, was einer Änderung der Blickrichtung bzw. Erfassungsrichtung entspricht. Der Fernbereich-Sensor kann als Radarsensor ausgebildet sein.

In einer weiteren Ausführungsform ist die Steuereinrichtung dazu ausgebildet, abhängig von den an der zweiten Messstelle und/oder abhängig von den vom Fernbereich-Sensor erfassten Messwerten vorausschauend eine Höhenabstandsänderung oder eine hiervon abgeleitete Größe zu bestimmen, welche angibt, ob der Höhenabstand des Verteilgestänges zur Zielfläche im Vergleich zum aktuellen Höhenabstand gleichbleibt, sich verringert oder sich erhöht. Besonders bevorzugt gibt die vorausschauend erfasste Höhenabstandsänderung lediglich an, ob der Höhenabstand des Verteilgestänges zur Zielfläche im Vergleich zum aktuellen Höhenabstand gleichbleibt, sich verringert oder sich erhöht. Die Steuereinrichtung ist hierbei ferner dazu ausgebildet, bevor das Verteilgestänge die zweite Messstelle erreicht, ein Stellsignal für die Stelleinrichtung abhängig von der bestimmten Höhenabstandsänderung oder der hiervon abgeleiteten Größe zu erzeugen, vorzugsweise zur Anpassung der Lage des Verteilgestänges an die Höhenabstandsänderung.

Diese Ausführungsform nutzt die Erkenntnis, dass die vorausliegende Höhenabstandsänderung nicht notwendigerweise numerisch genau ermittelt werden muss, sondern eine Erfassung, ob der Höhenabstand gleichbleibt, sich verringert oder sich erhöht, bereits vorteilhaft für eine schnelle Vorsteuerung genutzt werden kann. Auf diese Weise kann das Verteilgestänge bereits im Hinblick auf die kommende Höhenänderung in die richtige Richtung bewegt werden, bevor es die entsprechende Höhenänderung erreicht. Beispielsweise kann die Steuereinrichtung dazu ausgebildet sein, abhängig von den vorrauschauend erfassten sich ändernde Höhenabstände und/oder Konturänderungen einen Gradienten des Höhenabstands des Verteilgestänges zur Zielfläche zu bestimmen. Beispielsweise kann die Höhenabstandsänderung, die z. B. mit dem Fernbereich-Sensor erfasst wird, oder die hiervon abgeleitete Größe als ein Gradient des Höhenabstands des Verteilgestänges zur Zielfläche bestimmt werden, wobei weiter vorzugsweise nur eine Richtung des Gradienten und kein Betrag des Gradienten bestimmt wird.

In einer weiteren möglichen Ausführungsform ist die Steuereinrichtung dazu ausgebildet, einen Wert für das Stellsignal proportional zu einem Wert der vorrauschauend erfassten sich ändernden Höhenabstands (h) und/oder Konturänderung zu bestimmen. Beispielsweise kann die Steuereinrichtung dazu ausgebildet sein, einen Wert für das Stellsignal proportional zu einem Wert der vorausschauend erfassten und/oder bestimmten Höhenabstandsänderung oder der hiervon abgeleiteten Größe zu bestimmen. Dies ermöglicht eine besonders genaue vorausschauende Anpassung der Gestängelage an die Höhenabstandsänderung.

Alternativ hierzu kann die Steuereinrichtung dazu ausgebildet sein, abhängig von dem vorrauschauend erfassten sich ändernden Höhenabstand (h) und/oder Konturänderung und/oder abhängig von der bestimmten Höhenabstandsänderung oder der hiervon abgeleiteten Größe, ein Stellsignal zu erzeugen, das eine Veränderung der Lage des Verteilgestänges relativ zu der zu bearbeitenden landwirtschaftlichen Zielfläche um einen Offset-Wert bewirkt. Bei dieser Variante ist die von der Steuereinrichtung ausgelöste Stellbewegung des Verteilgestänges nicht proportional mit der Höhenabstandsänderung, vielmehr wird die Lage des Verteilgestänges lediglich um einen Offset-Wert verändert. Ein besonderer Vorteil ist, dass der Betrag der Höhenänderung vorausschauend nicht oder nicht sehr genau erfasst werden muss und eine vereinfachte und schnellere Datenverarbeitung ermöglicht wird.

Lediglich beispielhaft kann ein Offset-Wert von 5 oder 10 cm gewählt werden, d. h. wird vorausschauend eine Vergrößerung des Höhenabstands erkannt, wird der Höhenabstand des Verteilgestänge zur Zielfläche um 5 oder 10 cm vorausschauend verringert. Wird vorausschauend eine Verringerung des Höhenabstands erkannt, wird der Höhenabstand um 5 oder 10 cm vorausschauend vergrößert. Es ist ferner optional möglich, mehrere Offset-Werte vorab zu hinterlegen, um abhängig von der erfassten Höhenabstandsänderung einen der hinterlegten Offset-Werte auszuwählen. Anhand der Offset-Werte kann somit eine diskrete Vorsteuerung realisiert werden, um die Lage des Verteilgestänges an prognostizierte Höhenänderungen anzupassen.

In einer Ausführungsform kann die Steuereinrichtung dazu ausgebildet sein, abhängig von den an der ersten Messstelle und/oder abhängig von den vom Nahbereich-Sensor erfassten Messwerten einen Ist-Höhenabstand (aktuellen Höhenabstand) des Verteilgestänges zur Zielfläche zu bestimmen und zur Einregelung des Ist-Höhenabstands auf einen Soll-Höhenabstand zu verwenden. Dies bietet den Vorteil, dass sich verbleibende Abweichungen vom Soll-Höhenabstand, die sich aus der Vorsteuerung anhand der Messwerte der zweiten Messstelle ergeben, dann schnell und zuverlässig ausgeregelt werden können.

In einer weiteren Ausführungsform kann die Steuereinrichtung dazu ausgebildet sein, abhängig von den durch die Sensoreinrichtung erfassten Messwerten zu bestimmen, ob eine Umschaltbedingung erfüllt ist und bei Erfüllung der Umschaltbedingung von einem ersten Betriebsmodus zu einem zweiten Betriebsmodus zu wechseln. Beim ersten Betriebsmodus wird der Höhenabstand des Verteilgestänges abhängig von den an der ersten Messstelle erfassten Messwerten und/oder abhängig von den vom Nahbereich-Sensor erfassten Messwerten auf einen Soll-Höhenabstand eingeregelt. Beim zweiten Betriebsmodus werden abhängig von den an der zweiten Messstelle und/oder abhängig von den vom Fernbereich-Sensor vorausschauend erfassten, sich ändernden Höhenabständen durch die Steuereinrichtung Stellsignale zur Veränderung der Lage des Verteilgestänges erzeugt, die eine Anpassung einer aktuellen Lage des Verteilgestänges an die sich ändernden Höhenabstände vor Erreichen der zweiten Messstelle bewirken. Hierdurch wird ein einfacher Wechsel zwischen einer herkömmlichen Regelung des Ist-Höhenabstands auf einen Soll-Höhenabstand (erster Betriebsmodus) und einer zusätzlichen vorausschauenden Anpassung des Höhenabstands (zweiter Betriebsmodus) ermöglicht.

Die Umschaltbedingung kann beispielsweise erfüllt sein, wenn anhand der an der zweiten Messstelle erfassten Messwerte und/oder anhand der durch den Fernbereich-Sensor erfassten Messwerte eine vorausliegende Höhenabstandsänderung des Verteilgestänges zur Zielfläche oder eine hiervon abgeleitete Größe bestimmt wird, die betragsmäßig einen vorbestimmten Schwellenwert überschreitet. Hierdurch kann vorteilhaft sichergestellt werden, dass nur bei größeren, vorausschauend erfassten Höhenabstandsänderungen zum zweiten Betriebsmodus gewechselt wird, um ein ständiges Hin- und Herwechseln zwischen erstem und zweitem Betriebsmodus zu vermeiden.

Eine weitere Ausführungsvariante hiervon kann vorsehen, dass, falls der vorbestimmte Schwellenwert überschritten ist und ein Absenken des Verteilgestänges oder von Segmenten hiervon erfordern würde, die Umschaltbedingung nur dann erfüllt ist, wenn keine Bestandslücke und/oder kein Risiko eines Bodenkontakts oder Bestandstauchens durch das Verteilgestänge erkannt wird. Vorteilhaft können Beschädigungen und Fehlsteuerung des Verteilgestänges hierdurch besser vermieden werden.

Das Vorhandensein einer Bestandslücke, das Risiko eines Bodenkontakts oder eines Bestandstauchens kann z. B. anhand der an der ersten Messstelle erfassten Messwerte ermittelt und/oder abgeschätzt werden oder mit weiteren Sensoren, z. B. einen Nahbereich-Sensor (siehe nachfolgende Beschreibung) erfasst werden. Eine Bestandslücke kann eine Aussparung im Pflanzenbestand sein, die sich aber nicht über die ganze Arbeitsbreite der Verteilmaschine erstreckt.

In einer weiteren Ausführungsform kann die Steuereinrichtung dazu ausgebildet sein, eine durch eine Gestängeschwingung des Verteilgestänges erzeugte Abweichung des Verteilgestänges von einer SollLage bei der Höhensteuerung herauszurechnen, vorzugsweise derart, dass Vertikalschwingungen und/oder Horizontalschwingungen des Verteilgestänges keinen Einfluss auf die Bestimmung des Höhenabstands des Verteilgestänges und/oder die Höhensteuerung haben. Entsprechend kann eine genaue Erfassung von Höhenabständen und verbesserte Lagesteuerung erzielt werden.

In einer weiteren Ausführungsform kann die Steuereinrichtung dazu ausgebildet sein, abhängig von an den unterschiedlichen Messstellen ermittelten Höhenabständen einen Mittelwert zu bilden, der zur Erzeugung der Stellsignale und/oder zur Lagesteuerung des Verteilgestänges verwendet wird. Vorstehend wurde bereits erläutert, dass anhand der an der zweiten Messstelle erfassten Messwerte vorausliegende Höhenänderungen frühzeitig, jedoch etwas ungenauer erfasst werden können und anhand der an der ersten Messstelle erfassten Messwerte Ist-Höhenänderungen vergleichsweise genau erfasst werden können. Die Verwendung des Mittelwerts ermöglicht eine einfache Nutzung beider Vorteile. Der Mittelwert kann entsprechend auch durch Mittelung von den durch den Nahbereich-Sensor und den durch den Fernbereich-Sensor ermittelten Höhenabständen gebildet werden.

In einer weiteren Ausführungsform kann in der Steuereinrichtung die Reaktionszeit und/oder die Systemgeschwindigkeit bei der Lagesteuerung des Verteilgestänges hinterlegt sein. Alternativ oder zusätzlich hierzu kann die Steuereinrichtung dazu ausgebildet sein, die Reaktionszeit und/oder die Systemgeschwindigkeit anhand einer Zeitmessung zu bestimmen. Für unterschiedliche Arten der Lagesteuerung können unterschiedliche Reaktionszeiten und/oder Systemgeschwindigkeiten hinterlegt sein.

Vorstehend wurde bereits festgestellt, dass unter einer Reaktionszeit bei der Lagesteuerung die technisch bedingte Verzögerungszeit verstanden werden kann, die zwischen der sensorischen Erfassung eines sich ändernden Höhenabstands (h) und/oder einer Konturänderung und einer Anpassung der Lage des Verteilgestänges an die geänderte Höhenlage vergeht. Die Reaktionszeit bei der Lagesteuerung setzt sich zusammen aus einer Reaktionszeit der Sensoreinrichtung, der Steuereinrichtung und der Stelleinrichtung. Die Reaktionszeit hängt ab von der Systemgeschwindigkeit, insbesondere der Systemgeschwindigkeit der Stelleinrichtung. Die Systemgeschwindigkeit wiederum selbst kann variieren, z. B. in Abhängigkeit der Differenz der Höhenlage. Die Steuereinrichtung kann dazu ausgebildet sein, die Systemgeschwindigkeit zu beeinflussen. Beispielsweise können wahlweise Stellsignale für die Stelleinrichtung erzeugt werden, die eher einer sprunghaften (schnellen) Steuerung entspricht oder eher einer weicheren (langsamen) Steuerung entspricht. Entsprechend können Stellbewegungen erzeugt werden, die verschiedenen Rampen folgen.

Beispielsweise können wahlweise Stellsignale für die Stelleinrichtung erzeugt werden, die ein eher "weiches" und ggf. nicht exaktes Anfahren einer Solllage des Verteilgestänges bewirkt oder die ein sprunghaftes und ggf. exakteres Anfahren der Solllage bewirken. Bei einer fluidisch betätigbaren Stelleinrichtung, z. B. aufweisend hydraulisch arbeitende Stellzylinder, kann die Systemgeschwindigkeit mittels einer Volumenstromregelung, Druckregelventile etc. beeinflusst werden.

Die Steuereinrichtung kann dazu ausgebildet sein, die Systemgeschwindigkeit abhängig von den vorausschauend erfassten, sich ändernden Höhenabständen (h) und/oder Konturänderungen zu verändern.

In einer weiteren Ausführungsform kann in der Steuereinrichtung eine erste Reaktionszeit für ein Anheben des Verteilgestänges und/oder der Ausleger des Verteilgestänges nach oben hinterlegt sein und eine zweite Reaktionszeit, die kleiner als die erste Reaktionszeit ist, für ein Absenken des Verteilgestänges und/oder der Ausleger nach unten hinterlegt sein. Hierbei kann die Steuereinrichtung dazu ausgebildet sein, wahlweise die erste oder die zweite Reaktionszeit zu verwenden, je nachdem, ob zur Höhensteuerung ein Anheben des Verteilgestänges oder ein Absenken des Verteilgestänges nach unten erfolgt. Dieser Ausführungsform liegt die Erkenntnis zugrunde, dass das Anheben des Verteilgestänges und/oder der Ausleger nach oben länger dauert als ein Absenken, schwerkraftbedingt durch die jeweils unterschiedlichen benötigten Kräfte (bzw. des jeweils erforderlichen Druckaufbaus in den Stellzylindern, bei fluidisch betätigbaren Stellzylindern). Dies kann vorteilhaft durch die unterschiedlichen Reaktionszeiten berücksichtigt werden kann.

Eine alternative Ausführungsform vermeidet, dass feste Reaktionszeiten und/oder Systemgeschwindigkeit hinterlegt werden müssen. Stattdessen kann ein Zeitpunkt für die Ansteuerung des Verteilgestänges nach oben tendenziell etwas früher als für die Ansteuerung des Verteilgestänges nach unten erfolgen. Eine alternative Ausführungsform sieht daher vor, dass die Steuereinrichtung dazu ausgebildet ist, in Reaktion auf die von der Sensoreinrichtung vorausschauend erfassten Höhenabstände und/oder Konturänderungen Stellsignale für ein Anheben des Verteilgestänges und/oder der Ausleger des Verteilgestänges nach oben früher im Vergleich zu Stellsignalen für ein Absenken des Verteilgestänges und/oder der Ausleger nach unten festzulegen.

In einer bevorzugten Ausführungsform umfasst die Lagesteuerung des Verteilgestänges eine Höhensteuerung des Verteilgestänges, insbesondere eine Höhensteuerung eines Mittelteils des Verteilgestänges, wobei an dem Mittelteil die seitlichen Ausleger gehaltert sind. Hierzu umfasst die Stelleinrichtung eine Stelleinrichtung zur Höhenverstellung des Mittelteils. Gemäß einer Ausführungsvariante dieser Ausführungsform ist das Mittelteil zur Einstellung seines Höhenabstands gegenüber einer zu einer zu bearbeitenden landwirtschaftlichen Zielfläche, vorzugsweise einem Pflanzenbestand, in an sich bekannter Weise höhenverstellbar an einem Trägerfahrzeug der landwirtschaftlichen Verteilmaschine gehaltert. Die Stelleinrichtung kann zur Höhenverstellung des Mittelteils einen höhenverstellbaren Hubrahmen, der z. B. durch ein Parallelogrammgestänge oder einen Linearschlitten höhenverstellbar am Trägerfahrzeug gehaltert ist, umfassen. Zur Höhenverstellung kann dem Parallelogramm oder dem Linearschlitten z. B. ein Linearantrieb in Form eines Hydraulik- oder Pneumatikzylinders (als Teil der Stelleinrichtung) zugeordnet sein, so dass der Höhenabstand zwischen dem Verteilgestänge und einer Bodenoberfläche bzw. einem Pflanzenbestand variabel veränderbar ist.

In einer weiteren bevorzugten Ausführungsform umfasst die Lagesteuerung des Verteilgestänges eine Verschwenkung des Verteilgestänges um eine in Fahrtrichtung verlaufende Schwenkachse, vorzugsweise eine Verschwenkung eines Mittelteils des Verteilgestänges, an dem die seitlichen Ausleger gehaltert sind, um die in Fahrtrichtung verlaufende Schwenkachse. Hierzu ist das Verteilgestänge um eine in Fahrtrichtung verlaufende Schwenkachse bewegbar an einem Trägerfahrzeug der Verteilmaschine mittelbar oder unmittelbar angeordnet. Gemäß dieser Ausführungsform umfasst die Stelleinrichtung eine Stelleinrichtung, mittels der eine Stellkraft erzeugbar ist, um das Verteilergestänge um die Schwenkachse zu bewegen. Hierzu kann das Mittelteil über diese Stelleinrichtung mit einem Aufbau- oder Rahmenabschnitt und/oder mit einem starr oder beweglich gelagerten Stützabschnitt des Trägerfahrzeugs gekoppelt sein. Der Aufbau- oder Rahmenabschnitt und/oder der starr oder beweglich gelagerte Stützabschnitt kann ein Trägerrahmen, z. B. ein Hubrahmen zur Höhenverstellung sein, wie er vorstehend beschrieben wurde. Die Schwenkachse kann ferner beispielsweise durch ein Kugelgelenk ausgebildet sein. Das Kugelgelenk ermöglicht nicht nur eine Verschwenkung um die Schwenkachse, sondern ferner um eine weitere Achse.

Vorstehend wurde bereits festgestellt, dass die Lagesteuerung des Verteilgestänges abhängig von vorausschauend erfassten, sich ändernden Höhenabständen eine Höhenverstellung des gesamten Verteilgestänges, vorzugsweise anhand einer Höhenverstellung eines Mittelteils des Verteilgestänges, umfassen kann und/oder eine Verschwenkung des Verteilgestänges, vorzugsweise des Mittelteils, um eine in Fahrtrichtung verlaufende Schwenkachse umfassen kann.

Die Lagesteuerung des Verteilgestänges abhängig von vorausschauend erfassten, sich ändernden Höhenabständen kann alternativ oder zusätzlich eine Steuerung der Anwinkelung der Ausleger relativ zueinander und/oder der Anwinkelung benachbarter Segmente zueinander abhängig von den vorausschauend erfassten, sich ändernden Höhenabständen umfassen. Dies ermöglicht eine individuelle Anpassung einer Höhenlage der Ausleger und/oder deren Segmente an eine - in Längserstreckungsrichtung des Verteilgestänges gesehene - unebene Zielfläche.

Diesbzgl. Ausführungsformen werden nachfolgend beschrieben.

Weitere mögliche Ausführungsformen betreffen eine landwirtschaftliche Verteilmaschine, die wiederum zwei seitliche Ausleger und ein Mittelteil umfasst, die jeweils eine Mehrzahl von Ausbringelementen zum Ausbringen des Materials aufweisen. Gemäß dieser Ausführungsformen sind die seitlichen Ausleger jeweils um eine in Fahrtrichtung verlaufende Achse (nachfolgend auch als Auslegerachse bezeichnet) verschwenkbar am Mittelteil des Verteilgestänges gehaltert.

Die ansteuerbare Stelleinrichtung zur Veränderung einer Lage des Verteilgestänges relativ zur Zielfläche umfasst gemäß diesen Ausführungsformen Stellelemente, mittels derer die Ausleger um die in Fahrtrichtung verlaufenden Achsen (Auslegerachse) verschwenkbar sind. Entsprechend kann für jeden Ausleger individuell eine eigene Höhenlage zur Zielfläche eingestellt werden, z.B. durch Veränderung seiner Schwenklage zum Mittelteil.

Gemäß einer Ausführungsvariante hiervon können die Ausleger sich ferner jeweils aus zwei oder mehr Segmenten (die auch als Gestängeabschnitte bezeichnet werden können) zusammensetzen, wobei die Segmente wiederum um in Fahrtrichtung verlaufende Achsen (nachfolgend auch als Segmentachsen bezeichnet) schwenkbar zueinander sind. Dies bedeutet, dass die Ausleger jeweils, in Längserstreckungsrichtung der Ausleger gesehen, durch mehrere, z.B. 2 oder 3, durch Gelenke verbundene Segmente zusammengesetzt sind. Zwei benachbarte durch Gelenke verbundene Segmente (Gestängeabschnitte) umfassen ein inneres und äußeres Segment (Gestängeabschnitt) in Bezug auf das Mittelteil. Die ansteuerbare Stelleinrichtung umfasst gemäß dieser Ausführungsvariante zusätzlich Stellelemente, mittels derer die Segmente um die in Fahrtrichtung verlaufenden Achsen (Segmentachsen) verschwenkbar sind. Anders ausgedrückt ist ein solches zusätzliches von der Steuereinrichtung ansteuerbares Stellelement jeweils zwei benachbarten Segmenten und/oder deren die Segmentachse bildendes Gelenk zugeordnet. Entsprechend können benachbarte Segmente zueinander nach oben oder unten angewinkelt werden, um eine eigene Höhenlage für die einzelnen Segmente einzustellen.

Die Verteilmaschine umfasst für diese Ausführungsvarianten eine Sensoreinrichtung und eine Steuereinrichtung, die, wie vorstehend beschrieben, ausgebildet sein können. Die Steuereinrichtung ist hierbei vorzugsweise dazu ausgebildet, zur Lagesteuerung des Verteilgestänges Stellsignale für die Stelleinrichtung abhängig von den vorausschauend erfassten, sich ändernden Höhenabständen zu erzeugen, um eine Reaktionszeit bei der Lagesteuerung zumindest teilweise zu kompensieren, wobei die Lagesteuerung des Verteilgestänges eine Steuerung der Schwenklage der Ausleger um die Auslegerachse und/oder der Segmente der Ausleger um die Segmentachse umfasst.

In einer Ausführungsform ist die Sensoreinrichtung dazu ausgebildet, für jeden der Ausleger und/oder für unterschiedliche Segmente jedes Auslegers (d.h. für alle Segmente oder nur eine Teilmenge hiervon) jeweils sich ändernde Höhenabstände zur Zielfläche vorausschauend zu erfassen und/oder jeweils den Höhenabstand des Auslegers und/oder des Segments zur Zielfläche an unterschiedlichen Messstellen, die in Fahrtrichtung voneinander beabstandet sind, zu erfassen.

Alternativ oder zusätzlich kann die Sensoreinrichtung zur vorausschauenden Erfassung von sich jeweils verändernden Höhenabständen der beiden Ausleger und/oder von unterschiedlichen Segmenten der Ausleger Sensoren an jedem Ausleger, vorzugsweise Sensoren an mindestens zwei unterschiedlichen Segmenten pro Ausleger, umfassen und/oder hierzu mehrere Sensoren umfassen, die - in Längserstreckungsrichtung des Verteilgestänges gesehenen - beabstandet zueinander am Verteilgestänge angeordnet sind. Vorteilhaft kann auslegerspezifisch und/oder segmentspezifisch eine vorausliegende Höhenänderung vorausschauend erfasst werden.

Alternativ oder zusätzlich kann die Sensoreinrichtung pro Ausleger oder an mindestens zwei Segmenten pro Ausleger jeweils mindestens einen am jeweiligen Ausleger oder Segment angeordneten Nahbereich-Sensor umfassen, der dazu ausgebildet ist, Ist-Werte zum Höhenabstand des Verteilgestänges zur Zielfläche zu erfassen und/oder eine Ist-Kontur der Zielfläche abzutasten, und ferner mindestens einen am jeweiligen Ausleger oder Segment angeordneten Fernbereich-Sensor umfassen, der dazu ausgebildet ist, vorausliegende Werte zum Höhenabstand zu erfassen und/oder eine vorausliegende Kontur der Zielfläche abzutasten.

Dies bietet den Vorteil, dass auslegerspezifisch oder auch für einzelne Segmente sowohl ein Ist-Höhenabstand (mittels des Nahbereich-Sensors) als auch eine vorausliegende Höhenänderung vorausschauend erfasst werden kann, was entsprechend eine schnelle, aber auch präzise Lagesteuerung in Bezug auf Höhenabstände ermöglicht. Gemäß diesen Ausführungsvarianten umfasst die Sensoreinrichtung somit mehrere Paare aus jeweils einem Nahbereich-Sensor und einem Fernbereich-Sensor, die in Längserstreckungsrichtung des Verteilgestänges gesehen, beabstandet voneinander angeordnet sind. Mindestens ein solches Paar kann an jedem Ausleger angeordnet sein. Pro Ausleger können auch mehrere solcher Paare angeordnet sein, beispielsweise kann an mindestens zwei Segmenten jedes Auslegers ein solches Paar angeordnet sein. Ferner können jeweils ein Nahbereich-Sensor und ein Fernbereich-Sensor an der gleichen Stelle am Verteilgestänge übereinander oder nebeneinander angeordnet sein.

Die Fernbereich-Sensoren und Nahbereich-Sensoren können ausgebildet sein, wie es vorstehend bereits beschrieben wurde. Insofern wird auf die vorstehenden Ausführungen hierzu verwiesen.

Alternativ oder zusätzlich kann die Steuereinrichtung dazu ausgebildet sein, bei Kurvenfahrten und vorzugsweise bei Überschreiten einer vorbestimmten Fahrgeschwindigkeit, für die Höhensteuerung des kurveninnenseitig gelegenen Auslegers dessen mindestens einen Nahbereich-Sensor zu verwenden und für die Höhensteuerung des kurvenaußenseitig gelegenen Auslegers dessen mindestens einen Fernbereich-Sensors zu verwenden.

Vorstehend wurde bereits festgestellt, dass die Lagesteuerung des Verteilgestänges optional eine Steuerung von Segmenten der Ausleger um die in Fahrtrichtung verlaufenden Segmentachsen umfassen kann, vorzugsweise zur individuellen Anpassung eines Höhenabstands der Segmente an eine - in Längserstreckungsrichtung des Verteilgestänges gesehenen - unebene Zielfläche. In einer möglichen Ausführungsform hiervon kann in der Steuereinrichtung eine erste Reaktionszeit für ein Anwinkeln von Segmenten der Ausleger des Verteilgestänges nach oben hinterlegt sein und eine zweite Reaktionszeit, die kleiner als die erste Reaktionszeit ist, für ein Anwinkeln von Segmenten von Auslegern des Verteilgestänges nach unten hinterlegt sein. Schwerkraftbedingt dauert die Reaktion bei einer Anwinkelung der Segmente nach oben länger als nach einer Anwinkelung nach unten.

Eine weitere alternative Ausführungsform vermeidet, dass feste Reaktionszeiten hinterlegt werden müssen. Stattdessen kann ein Zeitpunkt für ein Anwinkeln von Segmenten der Ausleger nach oben tendenziell etwas früher als für das Anwinkeln von Segmenten nach unten erfolgen. Eine alternative Ausführungsform sieht daher vor, dass die Steuereinrichtung dazu ausgebildet ist, in Reaktion auf die von der Sensoreinrichtung vorausschauend erfassten Höhenabstände und/oder Konturänderungen Stellsignale für ein für ein Anwinkeln nach oben von Segmenten der Ausleger des Verteilgestänges früher im Vergleich zu Stellsignalen für ein für ein Anwinkeln nach unten von Segmenten der Ausleger des Verteilgestänges festzulegen.

Beispielsweise kann die Steuereinrichtung dazu ausgebildet sein, wahlweise die erste oder die zweite Reaktionszeit zu verwenden, um die zeitliche Ansteuerung der Stelleinrichtung anzupassen, je nachdem ob im Rahmen der Höhensteuerung ein Anwinkeln von Segmenten des Verteilgestänges nach oben oder nach unten erfolgt. Diese unterschiedlichen Reaktionszeiten müssen nicht notwendigerweise explizit als zeitliche Größe in der Steuereinrichtung hinterlegt sein, sondern können auch implizit in die Steueralgorithmen eingearbeitet sein.

Die erfindungsgemäße Sensoreinrichtung kann, wie vorstehend beschrieben wurde, für eine Anwinkelung der Ausleger zueinander verwendet werden, um somit auch eine Anwinkelung der Ausleger zueinander pro aktiv zu ermöglichen. Weitere Ausführungsvarianten hiervon werden nachfolgend beschrieben.

Vorzugsweise können den Segmenten der Ausleger Winkellagegeber und/oder ein Wegmesssystem im Hydraulikzylinder zur Erfassung und Weiterleitung eines Ist-Wertes bezüglich der Relativposition jeweils benachbarter Segmente zugeordnet sein. Die Segmente können untereinander mittels Gelenken verbunden sein und eine Stellbewegung der einzelnen Segmente zueinander kann von der Steuereinrichtung aktiv steuerbar sein, wobei jedem der Gelenke zwischen den Segmenten, d. h. zwei benachbarten Segmenten, jeweils eine steuerbares Stellelement zugeordnet ist.

Ferner kann die Steuereinrichtung dazu ausgebildet sein, in Abhängigkeit der Signale der Sensoreinrichtung und den Winkellagegebern die Stellsignale für die Stellelemente zu erzeugen, wobei eine Stellbewegung eines Segmentes immer in Relation zu den übrigen Segmenten eines Auslegers erfolgt. Hierbei kann bevorzugt eine Veränderung der Relativposition eines ersten Segmentes zeitgleich mit der gegensinnigen Veränderung der Relativposition mindestens eines zweiten Segmentes, welches auf dem gleichen Ausleger angeordnet ist, erfolgen, wodurch die Stellbewegung der äußeren Segmente in Relation zu den an diesem angeordneten jeweiligen inneren Segment erfolgt.

Die Ansteuerung der Stellelemente der Stellbewegung eines Segmentes immer in Relation zu den übrigen Segmenten eines Auslegers kann insbesondere erfolgen, wie es in der Offenlegungsschrift EP 2 186 405 A1 beschrieben ist. Die diesbzgl. Aspekte betreffend die Verstellung der Segmente in Relation zu den übrigen Segmenten werden hiermit unter Bezugnahme auf diese Offenlegungsschrift in die vorliegende Offenbarung mitaufgenommen.

Vorstehend wurde bereits festgestellt, dass zwei benachbarte durch Gelenke verbundene Segmente eines Auslegers ein inneres und äußeres Segment in Bezug auf das Mittelteil umfassen. In einer weiteren Ausführungsvariante kann die Steuereinrichtung ausgebildet sein, in Abhängigkeit der Signale der Sensoreinrichtung und den Winkellagegebern die Stellsignale für die Stellelemente zu erzeugen, wobei ein An-/Abwinkeln des äußeren Segments eines Auslegers in Abhängigkeit von einem An-/Abwinkeln des inneren Segments eines Auslegers durchgeführt, z. B. vorgesteuert, wird, derart, dass das An-/Abwinkeln des äußeren Segments an das An-/Abwinkeln des inneren Segments gekoppelt ist.

Diese Vorsteuerung des An-/Abwinkelns des äußeren Segments in Abhängigkeit von einem An-/Abwinkeln des inneren Segments eines Auslegers kann insbesondere erfolgen, wie es in der Offenlegungsschrift EP 2 186 405 A1 beschrieben ist. Die diesbzgl. Aspekte betreffend das gekoppelte An-/Abwinkeln der inneren und äußeren Segmente werden hiermit unter Bezugnahme auf diese Offenlegungsschrift in die vorliegende Offenbarung mitaufgenommen.

Die Stelleinrichtung kann pneumatische oder hydraulische Stellzylinder als Stellelemente aufweisen, z. B. zur Höhenverstellung des Mittelteils, zur Verschwenkung des Mittelteils um die in Fahrtrichtung verlaufende Achse, zur Verschwenkung der Ausleger um die Auslegerachse und/oder zur Verschwenkung der Segmente um die ihnen zugeordnete(n) Segmentachse(n).

Um die Reaktionszeit zu verringern bzw. die Systemgeschwindigkeit bei der Lagesteuerung des Verteilgestänges zu erhöhen, wäre es auch denkbar, dass die Ansteuerung entsprechend ausgeführt ist, und somit bspw. die Wirkquerschnitte der Stellzylinder einer fluidisch betätigbaren Stelleinrichtung angepasst und/oder anpassbar sind.

Vorzugsweise kann sich der Begriff "Steuereinrichtung" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die Verteilmaschine kann eine selbstfahrende oder eine mittels eines Zugfahrzeugs gezogene oder eine an ein Zugfahrzeug angebaute Verteilmaschine sein. Die selbstfahrende Verteilmaschine kann zudem eine autonom fahrende Landmaschine sein, beispielsweise eine vollautonom oder teilautonom fahrende Landmaschine. Das Verteilgestänge weist eine hohe Arbeitsbreite auf, d. h. eine Arbeitsbreite, die wesentlich größer als eine Breite des Trägerfahrzeugs ist, z. B. ein Vielfaches der Breite des Trägerfahrzeugs. Ferner können die zwei seitlichen Ausleger der Verteilmaschine und/oder die Segmente der Ausleger jeweils über eine vertikale Schwenkachse drehbar mit einem Mittelteil des Spritzgestänges verbunden sein zum Ein- und Ausklappen von einer Transportstellung im eingeklappten Zustand in eine Arbeitsstellung im ausgeklappten Zustand.

Die Verteilmaschine kann in an sich bekannter Weise ferner eine Sensorik zur Erfassung einer Drehlage und/oder eine Drehgeschwindigkeit und/oder eine Beschleunigung des Verteilergestänges umfassen. Die Verteilmaschine kann in an sich bekannter Weise ferner eine Sensorik zur Erfassung von Stellkräften und/oder Stell- bzw. Relativbewegungen zwischen dem Mittelteil des Verteilgestänges und der Anbindung am Trägerfahrzeug, z. B. dem Stütz-, Aufbau- oder Rahmenabschnitt am Trägerfahrzeug, aufweisen. Für eine beispielhafte Ausführung derartiger Sensoriken und der Verwendung bei der Steuerung der Drehlage des Verteilgestänges um die zentrale Schwenkachse des Mittelteils wird auf die Offenlegungsschriften EP 2 591 657 A1, WO 2015/040133 A1, WO 2015/055680 A1, WO 2015/067804 A1, DE 10 2019 123 113 A1 verwiesen, deren diesbzgl. Aspekte betreffend die Sensorik und deren Verwendung bei der Steuerung der Drehlage des Verteilgestänges um die zentrale Schwenkachse des Mittelteils werden hiermit unter Bezugnahme auf diese Offenlegungsschriften in diese Offenbarung mitaufgenommen. Die Sensorik kann z. B. einen Drehratensensor zur Erfassung der Drehgeschwindigkeit des Verteilgestänges um die Schwenkachse, einen Drehlagesensor zur Erfassung der Drehlage des Verteilgestänges um die Schwenkachse, einen Beschleunigungssensor zur Erfassung einer Beschleunigung des Verteilgestänges, eine Drucksensorik zur Erfassung der vorstehend genannten Stellkräfte und/oder Stell- bzw. Relativbewegungen und/oder Druckregelventile zur Ausregelung der vorstehend genannten Stellkräfte und/oder Stell- bzw. Relativbewegungen umfassen.

Gemäß einem zweiten allgemeinen Gesichtspunkt wird ein Verfahren zur Lagesteuerung eines Verteilgestänges einer landwirtschaftlichen Verteilmaschine bereitgestellt. Das Verfahren umfasst dabei den Schritt eines vorausschauenden Erfassens von sich verändernden Höhenabständen des Verteilgestänges zu einer zu bearbeitenden landwirtschaftlichen Zielfläche mit einer Sensoreinrichtung. Das Verfahren umfasst ferner, abhängig von den vorausschauend erfassten, sich verändernden Höhenabständen, ein Erzeugen von Stellsignalen für eine Stelleinrichtung zur Veränderung einer Lage des Verteilgestänges relativ zur Zielfläche, wobei eine Reaktionszeit bei der Lagesteuerung des Verteilgestänges zumindest teilweise kompensiert wird, in dem die Stellsignale erzeugt werden, bevor das Verteilgestänge die sich verändernden Höhenabstände erreicht.

Das Verfahren zur Lagesteuerung des Verteilgestänges abhängig von vorausschauend erfassten, sich ändernden Höhenabständen kann, wie bereits festgestellt, ein Verfahren zur Höhensteuerung des Verteilgestänges sein, z. B. ein Verfahren zur Höhenverstellung des gesamten Verteilgestänges, vorzugsweise anhand einer Höhenverstellung eines Mittelteils des Verteilgestänges umfassen. Alternativ oder zusätzlich kann das Verfahren zur Lagesteuerung des Verteilgestänges eine Verschwenkung des Verteilgestänges, vorzugsweise des Mittelteils, um eine in Fahrtrichtung verlaufende Schwenkachse umfassen. Alternativ oder zusätzlich kann das Verfahren zur Lagesteuerung des Verteilgestänges eine Höhensteuerung der Ausleger anhand einer Steuerung der Anwinkelung der Ausleger relativ zueinander und/oder der Anwinkelung benachbarter Segmente zueinander umfassen.

Zur Vermeidung von Wiederholungen sollen rein vorrichtungsgemäß offenbarte Merkmale auch als verfahrensgemäß offenbart gelten und beanspruchbar sein. Die vorgenannten Aspekte und erfindungsgemäßen Merkmale, insbesondere im Hinblick auf die Ausbildung der Verteilmaschine, insbesondere der Sensoreinrichtung, der Stelleinrichtung und die Steuereinrichtung, gelten somit auch für das Verfahren.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1A: eine schematische Perspektivansicht einer Verteilmaschine gemäß einer Ausführungsform der Erfindung;
- Figur 1B: eine schematische Hinteransicht der Verteilmaschine aus Figur 1A;
- Figur 2: eine Illustration einer Erfassung von sich verändernden Höhenabständen mit einem Nahbereich- und einem Fernbereich-Sensor gemäß einer Ausführungsform der Erfindung;
- Figur 3A, 3B und 4: schematische Blockdiagramme zur Illustration einer Lagesteuerung des Verteilgestänges gemäß Ausführungsformen der Erfindung;
- Figur 5 und 6: jeweils eine Illustration einer Erfassung von sich verändernden Höhenabständen mit einem Nahbereich- und einem Fernbereich-Sensor gemäß einer Ausführungsform der Erfindung;
- Figur 7A: eine schematische Perspektivansicht einer Verteilmaschine gemäß einer Ausführungsform der Erfindung;
- Figur 7B: eine schematische Hinteransicht der Verteilmaschine aus Figur 7A;
- Figur 8A: eine schematische Seitenansicht einer Verteilmaschine gemäß einer Ausführungsform der Erfindung;
- Figur 8B: eine schematische Detailansicht von hinten der Verteilmaschine aus Figur 8A;
- Figur 9A: eine schematische Hinteransicht der Verteilmaschine gemäß einer Ausführungsform der Erfindung; und
- Figur 9B: eine schematische Detailansicht zweier benachbarter, zueinander verschwenkbarer Segmente eines Auslegers gemäß einer Ausführungsform der Erfindung.

Gleiche oder funktional äquivalente Elemente sind in den Figuren zum Teil mit denselben Bezugszeichen bezeichnet und zum Teil nicht gesondert beschrieben.

Die Verteilmaschine 1 ist beispielhaft als gezogene Feldspritze ausgeführt, d. h. als eine mittels eines Zugfahrzeugs koppelbare bzw. gezogene landwirtschaftliche Feldspritze ausgebildet. Die Fahrtrichtung ist mit dem Pfeil V gekennzeichnet. Die Längserstreckungsrichtung des Verteilgestänges mit dem Pfeil L.

Die Verteilmaschine 1 weist ein an einem Trägerfahrzeug 5 mittelbar oder unmittelbar gehaltertes Verteilgestänge 2 zum Ausbringen von Material, wie Düngemittel, Pflanzenschutzmittel oder Saatgut, auf. Das auszubringende Material ist im Falle einer Feldspritze eine Spritzflüssigkeit. Das Verteilgestänge 2 umfasst zwei seitliche Ausleger 3, die an ihrem inneren Ende schwenkbar an einem Mittelteil 4 befestigt sind und ein äußeres freies Ende aufweisen. Das Verteilgestänge 2 kann hierbei bspw. Arbeitsbreiten von mehr als 20 Metern aufweisen. Das Verteilgestänge 2 bzw. die Ausleger 3 können zumindest abschnittsweise durch eine fachwerkartige Gestängestruktur bzw. durch eine Fachwerkkonstruktion gebildet sein. Darüber hinaus weist die Gestängestruktur bzw. die Fachwerkkonstruktion eine größere Höhe als Tiefe auf.

Die zwei seitlichen Ausleger 3 und das Mittelteil 4 weisen jeweils eine Mehrzahl von Ausbringelementen zum Ausbringen des Materials auf, z. B. in Längserstreckungsrichtung des Verteilgestänges beabstandet angeordnete Spritzdüsen.

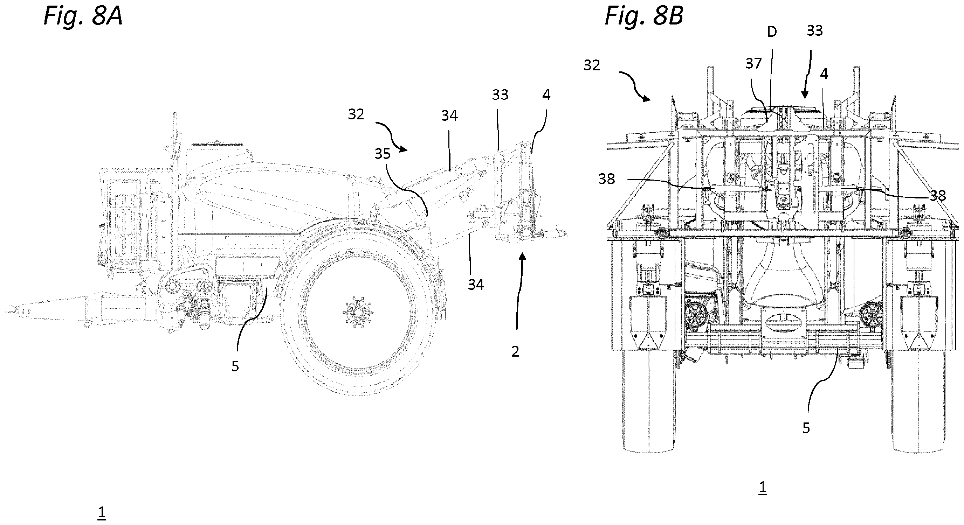

Das Mittelteil 4 ist zur Einstellung seines Höhenabstands gegenüber einer zu einer zu bearbeitenden landwirtschaftlichen Zielfläche Z höhenverstellbar mittels einer Stelleinrichtung 32 zur Höhenverstellung des Mittelteils 4 am Trägerfahrzeug 5 gehaltert. Die Stelleinrichtung 32 zur Höhenverstellung des Mittelteils 4 umfasst hierzu einen höhenverstellbaren Hubrahmen 33, an dem das Mittelteil 4 gehaltert ist. Der Hubrahmen 33 ist durch ein Parallelogrammgestänge 34 in an sich bekannter Weise höhenverstellbar am Trägerfahrzeug 5 gehaltert. Die Stelleinrichtung 32 zur Höhenverstellung des Mittelteils 4 umfasst ferner zwei fluidisch betätigbare Stellzylinder 35, die sich am einen Ende am Trägerfahrzeug 5 und am anderen Ende am Hubrahmen 33 abstützen. Mittels der Stelleinrichtung 32 kann somit das ganze Verteilgestänge zur Höhensteuerung hoch- und heruntergefahren werden. Die Stelleinrichtung 32 ist ferner in der Figur 8A besser erkennbar dargestellt.

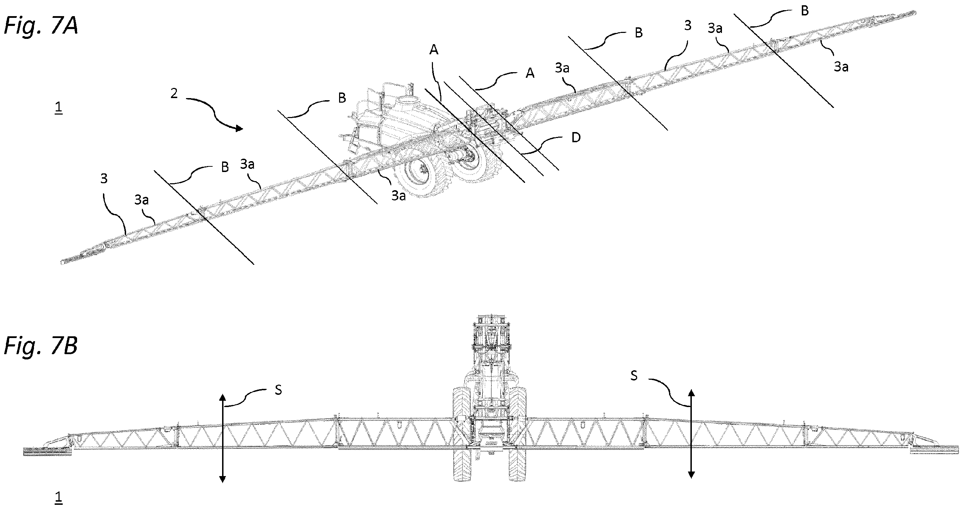

Zur Lagesteuerung des Verteilgestänges 2 sind das Verteilgestänge, die Ausleger 3 und optional ferner einzelne Segmente der Ausleger 3 um in Fahrtrichtung V verlaufende horizontale Achsen verschwenkbar, was an sich aus dem Stand der Technik bekannt ist und nachfolgend in Zusammenhang mit den Figuren 7A bis 9B noch näher erläutert wird.

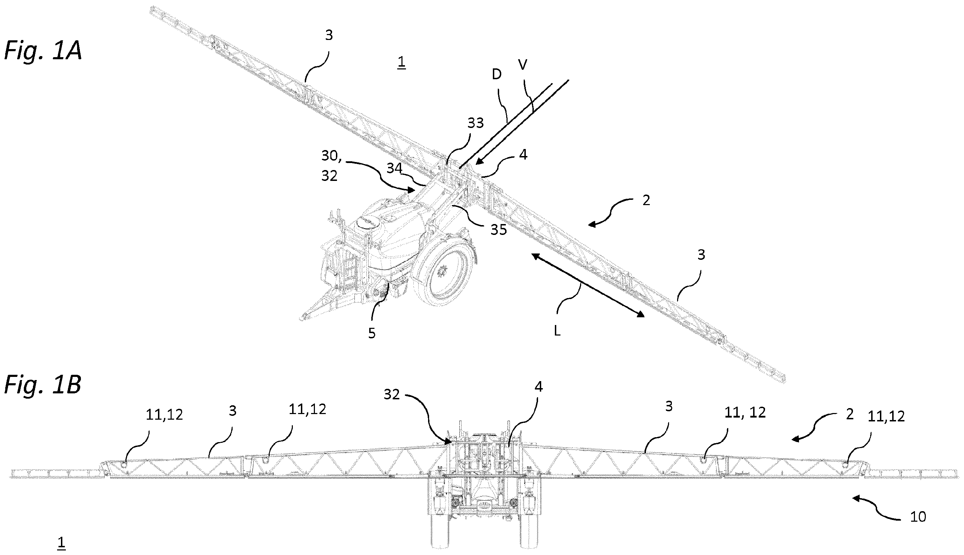

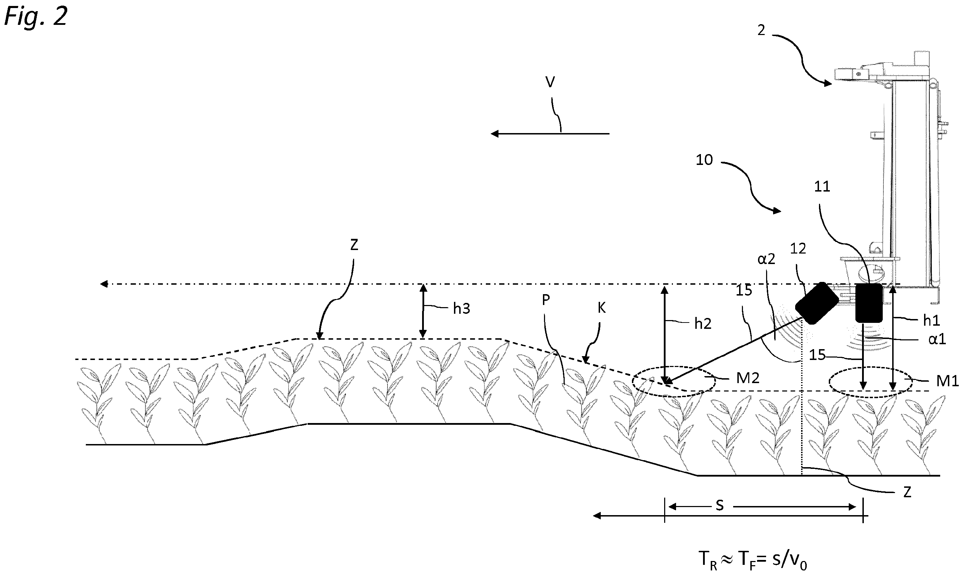

Wie in Figur 1B und der Figur 2 dargestellt ist, weist die Verteilmaschine 1 eine Sensoreinrichtung 10 auf. Diese ist dazu ausgebildet, sich ändernde Höhenabstände des Verteilgestänges 2 zu der Zielfläche Z vorausschauend zu erfassen. Die Sensoreinrichtung 10 umfasst hierzu an zwei von drei Segmenten jedes Auslegers 3 jeweils einen Nahbereich-Sensor 11 und einen Fernbereich-Sensor 12. Alternativ können auch für das ganze Verteilgestänge 2 oder pro Ausleger 3 lediglich ein Paar aus Nahbereich-Sensor 11 und Fernbereich-Sensor 12 angeordnet sein oder an jedem Segment des Auslegers 3 ein Paar aus Nahbereich-Sensor und Fernbereich-Sensor 12 angeordnet sein.

Figur 2 illustriert im Detail eine Illustration einer Erfassung von sich verändernden Höhenabständen h mit einem Nahbereich- und einem Fernbereich-Sensor gemäß einer Ausführungsform der Erfindung. Aus Gründen der besseren Übersichtlichkeit ist in Figur 2 nur das Verteilgestänge 2 in einer Seitenansicht dargestellt, nicht jedoch die Stelleinrichtung, mit der die Lage des Verteilgestänges verändert werden kann, noch das Trägerfahrzeug 5. Wie in Figur 2 erkennbar ist, kann sich der vorausliegende Höhenabstand h des Verteilgestänges entlang der Fahrtrichtung V verändern, wenn das Verteilgestänge seine aktuelle Höhenlage beibehalten würde.

Der Höhenabstand h entspricht hier einem Abstand der Unterseite des Verteilgestänges 2 zu einer Zielfläche Z, hier einem Pflanzenbestand P. Der Höhenabstand ändert sich hier, z. B. ausgehend von h1 zur h2, h3 usw., weil sich die Kontur K der Zielfläche in Fahrtrichtung ändert.

Beim Ausbringen soll der Abstand zwischen dem Verteilgestänge und dem Feldboden oder dem Pflanzenbestand während der Fahrt in Fahrtrichtung möglichst konstant bleiben.

Die Sensoreinrichtung 10 umfasst einen Nahbereich-Sensor 11, der dazu ausgebildet ist, an einer ersten Messstelle (Messbereich) M1 Ist-Werte h1 zum Höhenabstand des Verteilgestänges zur Zielfläche zu erfassen und/oder eine Ist-Kontur der Zielfläche abzutasten.

Die Sensoreinrichtung 10, die dazu ausgebildet ist, sich ändernde Höhenabstände h des Verteilgestänges 2 zu der Zielfläche Z vorausschauend zu erfassen, umfasst hierzu ferner einen Fernbereich-Sensor 11, der dazu ausgebildet ist, an einer zweiten Messstelle (Messbereich) M2 vorausliegende Werte h2 zum Höhenabstand zu erfassen und/oder eine vorausliegende Kontur der Zielfläche abzutasten, wobei die zweite Messstelle M2 - in Fahrtrichtung V gesehen - mehrere Meter vor der ersten Messstelle M1 liegt.

Der Nahbereich-Sensor 11 und der Fernbereich-Sensor 12 sind jeweils als Ultraschallsensor ausgeführt. Der Fernbereich-Sensor 12 weist jedoch eine im Vergleich zum Nahbereich-Sensor 11 weiter nach vorne auf die Zielfläche orientierte Blickrichtung auf.

Der Nahbereich-Sensor 11 weist eine nach unten orientierte Blickrichtung 15 auf, die einen Winkel α1 zu einer Vertikalen Z bildet, der im Bereich von 0° bis 15° liegt. Der Fernbereich-Sensor 12 weist dagegen eine schräg nach vorne orientierte Blickrichtung 15 auf, die im Vergleich zur Blickrichtung des Nahbereich-Sensors weiter nach vorne gerichtet ist. Die Blickrichtung des Fernbereich-Sensors 12 kann einen Winkel α2 zu einer Vertikalen bilden, der in einem Bereich von 5° und 90° oder in einem Bereich von 15° bis 70 zur Vertikalen Z liegt. Der Winkel α1 zur Vertikalen Z ist somit kleiner als α2. Im in Figur 2 gezeigten Beispiel hat der Winkel α2 lediglich beispielhaft den Wert 45°.

Somit entspricht die erste Messstelle M1 einem Nahbereich unterhalb oder schräg unten vor dem Verteilgestänge 2. Die erste Messstelle M1 kann Messpunkte eines Bereichs, der - in Fahrtrichtung V gesehen - einen Abstand vom Verteilgestänge 2 aufweist, der im Bereich von null bis einem Meter liegt, umfassen. Die zweite Messstelle M2 entspricht dagegen einem Fernbereich, der - in Fahrtrichtung V gesehen -vor dem Nahbereich liegt. Die zweite Messstelle M2 kann Messpunkte eines Bereichs, der - in Fahrtrichtung (V) gesehen - einen Abstand vom Verteilgestänge 2 aufweist, der in einem Bereich von einem bis 50 Metern, vorzugsweise in einem Bereich von einem bis 10 Metern liegt, umfassen.

Mit dem Nahbereich-Sensor 11 kann der Ist-Höhenabstand h1 relativ genau erfasst werden. Wenn jedoch mit diesem Sensor 11 ein veränderter Höhenabstand erkannt wird, auf den reagiert werden muss, damit der gewünschte Höhenabstand des Verteilgestänges zur Zielfläche Z eingehalten werden kann, kann diese Anpassung des Höhenabstandes nicht rechtzeitig erfolgen.

Der Grund ist die technische Reaktionszeit T_{R}, die benötigt wird, um die neue Gestängelage einzustellen. Die Reaktionszeit T_{R} ist spezifisch für jede Verteilmaschine und wird beispielsweise beeinflusst durch die vergleichsweise hohe Massenträgheit des Gestänges, die Reaktionszeit der Hydraulik und der Verarbeitungszeit der Sensordaten. Bei einer Fahrgeschwindigkeit v₀ legt das Gestänge in dieser Zeit T_{R} die Strecke s= v₀^{∗} T_{R} zurück.

Mit der vorliegenden Sensoreinrichtung 10 können durch Verwendung des Fernbereich-Sensors 12 sich ändernde Höhenabstände h des Verteilgestänges 2 zu der Zielfläche Z vorausschauend erfasst bzw. prognostiziert werden. Durch die vorausschauende Erfassung von sich ändernden Höhenabständen können Stellsignale zur Anpassung an diese sich ändernden Höhenabstände erzeugt werden, bevor das Verteilgestänge 2 einen geänderten Höhenabstand erreicht. Entsprechend kann die Reaktionszeit für diese Anpassung zumindest teilweise kompensiert werden.

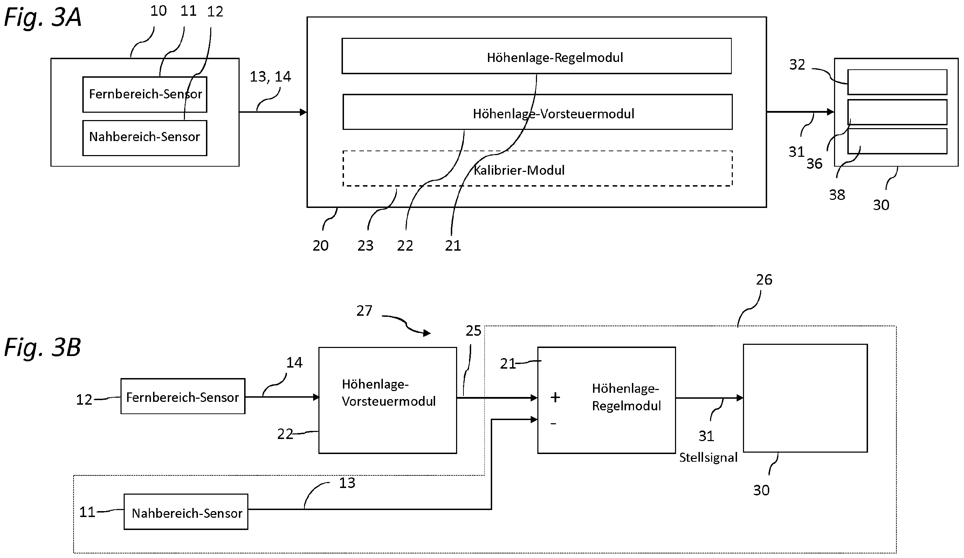

Ein Beispiel für eine solche Lagesteuerung ist in den Figuren 3A und 3B erläutert, die eine Lagesteuerung des Verteilgestänges gemäß einer Ausführungsform der Erfindung illustrieren.

Die Verteilmaschine 1 umfasst eine Steuereinrichtung 20, die dazu ausgebildet ist, zur Lagesteuerung, vorzugsweise zur Höhensteuerung, des Verteilgestänges 2 Stellsignale 31 für die Stelleinrichtung 30 abhängig von den vorausschauend erfassten, sich ändernden Höhenabständen zu erzeugen, um eine Reaktionszeit bei der Lagesteuerung zumindest teilweise zu kompensieren. Die Steuereinrichtung 10 empfängt hierzu eingangsseitig Messdaten 14 von der zweiten Messstelle M2 und dem Fernbereich-Sensor 12 und Messdaten 13 von der ersten Messstelle M1 und dem Nahbereich-Sensor 11, d. h. Messdaten 13 zum Ist-Höhenabstand h1 und Messdaten 14 zum vorausliegenden Höhenabstand h2.

Die Stelleinrichtung 30 kann z. B. eine Stelleinrichtung 32 zur Höhenverstellung des Mittelteils 4 sein. Dies ist dann der Fall, falls die Lagesteuerung des Verteilgestänges 2 einer Höhensteuerung des Verteilgestänges 2 anhand einer Höhenverstellung des Mittelteils 4 entspricht.

Diese Ausführungsform nutzt, dass Höhenabstandsdaten an der ersten Messstelle M1 genau, aber zur Kompensation der Reaktionszeit zu spät erfasst werden, dagegen Höhenabstandsdaten an der zweiten Messstelle M weniger genau, dafür aber vorausschauend erfasst werden können, so dass frühzeitig auf sich verändernde Höhenabstandsdaten reagiert werden kann. Die Nutzung von Höhenabstandsdaten von beiden Messstellen M1, M2 ermöglicht in Kombination eine schnelle und besonders genaue Lagesteuerung des Verteilgestänges in Reaktion auf sich verändernde Höhenabstände des Verteilgestänges 2 zur Zielfläche Z.

Zwar ist die Höhenabstandsmessung mit dem Fernbereich-Sensor 12 aufgrund der schrägen Blickrichtung 15 ungenauer, jedoch ist es in der Praxis bereits ausreichend, zu erkennen, ob der Höhenabstand im Vergleich zum aktuellen Höhenabstand gleichbleibt, sich verringert oder sich erhöht, so dass bereits frühzeitig durch eine Korrektur der Höhenlage eingeleitet werden kann. Hierzu kann die Steuereinrichtung 20 ein Höhenlage-Vorsteuermodul 22 umfassen, das diese Funktionalität bereitstellt.

Eine genaue Einregelung kann dann anschließend anhand von Messwerten des Nahbereich-Sensors 11 erfolgen. Hierzu kann die Steuereinrichtung 2 ein Höhenlage-Regelmodul 21 umfassen, das diese Funktionalität bereitstellt.

Wie in Figur 3B illustriert ist, ist die Steuereinrichtung 20, insbesondere das Höhenlage-Vorsteuermodul 22, dazu ausgebildet, abhängig von den vom Fernbereich-Sensor 12 erfassten Messwerten 14 vorausschauend eine Höhenabstandsänderung oder eine hiervon abgeleitete Größe zu bestimmen, welche angibt, ob der Höhenabstand des Verteilgestänges 2 zur Zielfläche Z im Vergleich zum aktuellen Höhenabstand gleichbleibt, sich verringert oder sich erhöht. Abhängig hiervon wird eine neue Soll-Höhenlage 25 bestimmt. Wenn anhand der Fernbereich-Sensordaten keine vorausliegende Höhenänderung erkannt wird oder zumindest keine, die größer als ein Schwellenwert ist, bleibt der Wert für die Soll-Höhenlage unverändert. Die Soll-Höhenlage 25 wird an das Höhenlage-Regelmodul 21 übermittelt.

Die Steuereinrichtung 20, vorzugsweise das Regelmodul 21, ist dazu ausgebildet, abhängig von den vom Nahbereich-Sensor 11 erfassten Messwerten 13 eine Abweichung des Ist-Höhenabstands h1 des Verteilgestänges zur Zielfläche Z von dem Soll-Höhenabstand 25 zu bestimmen und abhängig hiervon Stellsignale 31 für die Stelleinrichtung 30 zur Einregelung des Ist-Höhenabstands auf den Soll-Höhenabstand zu erzeugen.

Wird somit anhand des Fernbereich-Sensors 12 keine Veränderung des Höhenabstands vorausgesagt, bleibt der Soll-Höhenabstand gleich und wird fortlaufend vom Höhenregelmodul 21 überwacht und eingeregelt. Dies entspricht einem ersten Betriebsmodus 26, bei dem der Höhenabstand des Verteilgestänges 2 abhängig von den an der ersten Messstelle erfassten Messwerten 13 auf einen Soll-Höhenabstand eingeregelt wird.

Sobald jedoch anhand der Messdaten 14 des Fernbereich-Sensors 12 eine (Mindest-)Veränderung des Höhenabstands vorausgesagt wird, wird zu einem zweiten Betriebsmodus 27 gewechselt, in dem abhängig von den an der zweiten Messstelle M2 vorausschauend erfassten, sich ändernden Höhenabständen Stellsignale zur vorausschauenden Veränderung der Lage des Verteilgestänges 2 erzeugt werden, die eine Anpassung einer aktuellen Lage des Verteilgestänges 2 an die sich ändernden Höhenabstände vor Erreichen der zweiten Messstelle M2 bewirken.

Die Steuereinrichtung 20 kann ferner dazu ausgebildet sein, Messdaten 14 des weniger genauen Fernbereich-Sensors 12 zu einem Zeitpunkt t anhand von Messdaten 13 des genaueren Nahbereich-Sensors 11 zu einem Zeitpunkt t+x zu überprüfen und zu kalibrieren, wobei t+x der Zeit entspricht, zu der die erste Messstelle M1 die Lage der zweiten Messstelle M2 im aktuellen Fahrbetrieb erreicht. Falls beispielsweise die Überprüfung eine Abweichung eines mittels der Messdaten des Fernbereich-Sensors zum Zeitpunkt t ermittelten Höhenabstands zu einem mittels der Messdaten des Nahbereich-Sensors 11 zum Zeitpunkt t+x ermittelten Höhenabstand ergibt, wird diese Abweichung als Offset oder Korrekturwert für die Messdaten des Fernbereich-Sensors 12 verwendet. Der Offset oder Korrekturwert kann fortlaufend angepasst werden. Diese Funktionalität kann durch ein optionales Kalibriermodul 23 bereitgestellt werden.

Optional kann die Steuereinrichtung 20 ferner dazu ausgebildet sein, eine durch eine Gestängeschwingung des Verteilgestänges 2 erzeugte Abweichung des Verteilgestänges von einer SollLage bei der Höhensteuerung herauszurechnen, vorzugsweise derart, dass Vertikalschwingungen S und/oder Horizontalschwingungen des Verteilgestänges keinen Einfluss auf die Bestimmung des Höhenabstands des Verteilgestänges und/oder die Höhensteuerung haben.

Aufgrund der hohen Arbeitsbreite von Verteilgestängen kann es bekanntermaßen zu störenden Vertikalschwingungen und/oder Horizontalschwingungen des Verteilgestänges kommen, bei denen die freien Enden der Ausleger hin- und herschwingen. Derartige Schwingungen können sensorisch erfasst werden, z. B. mit Beschleunigungssensoren, die am Verteilgestänge angeordnet sind und/oder mit dem Nahbereich-Sensor 11. Die so erfassten Schwingungen stellen einen Störeinfluss auf die Höhenabstandsmessung dar. Vertikalschwingungen führen zu Abweichungen nach oben oder nach unten von der mittleren Höhenlage des Verteilgestänges. Horizontalschwingungen führen zu Abweichungen nach vorne oder nach hinten von der mittleren Position in Fahrtrichtung des Verteilgestänges. Die Steuereinrichtung kann dazu ausgebildet sein, diese Effekte rechnerisch anhand der sensorisch erfassten Schwingungen herauszurechnen. Entsprechend kann eine genauere Erfassung von Höhenabständen und eine verbesserte Lagesteuerung erzielt werden. In Figur 7B sind durch die Doppelpfeile S beispielhaft solche Vertikalschwingungen illustriert.

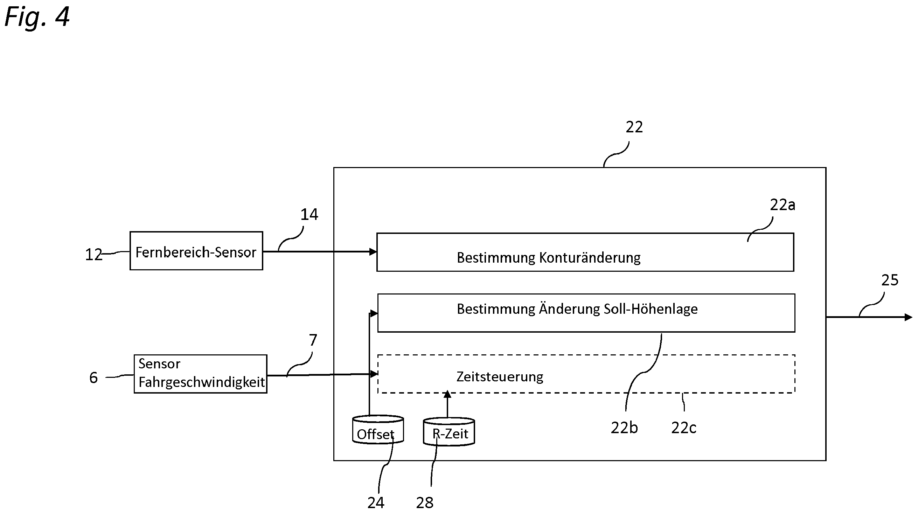

Figur 4 zeigt ein schematisches Blockdiagramm zur Illustration einer Lagesteuerung des Verteilgestänges gemäß einer weiteren Ausführungsvariante. Diese diesbgzl. Funktionalität kann beispielhaft im Höhenlage-Vorsteuermodul 22 implementiert sein.

Beispielweise kann die Steuereinrichtung 20, z.B. des Höhenlage-Vorsteuermoduls 22, dazu ausgebildet sein, abhängig von den an der zweiten Messstelle (M2) erfassten Messwerten vorausschauend eine Konturänderung der Zielfläche, d. h. eine Höhenabstandsänderung oder eine hiervon abgeleitete Größe zu bestimmen (vgl. Modul 22a), welche lediglich angibt, ob der Höhenabstand des Verteilgestänges zur Zielfläche im Vergleich zum aktuellen Höhenabstand gleichbleibt, sich verringert oder sich erhöht. Selbst wenn die Messung mit dem Fernbereich-Sensor 12 weniger genau ist als mit dem Nahbereich-Sensor 11, kann dennoch zuverlässig festgestellt werden, ob der Höhenabstand des Verteilgestänges zur Zielfläche an der zweiten Messstelle M2 im Vergleich zum aktuellen Höhenabstand gleichbleiben wird, sich verringern wird oder sich erhöhen wird. D. h. es kann vorhergesagt werden, ob der Höhenabstand sich ändern wird und wenn ja, in welche Richtung. Beispielsweise kann die Höhenabstandsänderung oder die hiervon abgeleitete Größe als ein Gradient des Höhenabstands des Verteilgestänges 2 zur Zielfläche Z bestimmt werden, wobei optional nur eine Richtung des Gradienten und kein Betrag des Gradienten bestimmt wird.

Bevor das Verteilgestänge 2 die zweite Messstelle M2 erreicht, wird ein Stellsignal 31 für die Stelleinrichtung 30 abhängig von der bestimmten Höhenabstandsänderung oder der hiervon abgeleiteten Größe erzeugt zur Anpassung der Lage des Verteilgestänges 2 an die Höhenabstandsänderung. Für eine vorteilhafte Umsetzung kann das Höhenlage-Vorsteuermodul 22 dazu ausgebildet sein, abhängig von der bestimmten Höhenabstandsänderung oder der hiervon abgeleiteten Größe, die Soll-Höhenlage um einen Offset-Wert 24 anzupassen, so dass in Reaktion hierauf ein Stellsignal 31 erzeugt wird, das eine Veränderung der Lage des Verteilgestänges 2 relativ zu der zu bearbeitenden landwirtschaftlichen Zielfläche Z um den Offset-Wert 24 bewirkt (vgl. Modul 22b). Ist z. B. die aktuelle Soll-Höhenlage auf 50 cm eingestellt, kann beispielhaft ein Offset-Wert von 5 oder 10 cm gewählt werden. Wird in diesem Fall vorausschauend eine Vergrößerung des Höhenabstands erkannt, wird die aktuelle Soll-Höhenlage kurzzeitig um 5 oder 10 cm vorausschauend verkleinert. Anschließend kann die Soll-Höhenlage wird auf 50 cm zurückgesetzt werden, z. B. nach Erreichen der zweiten Messstelle M2, so dass das Regelmodul 21 eine genauere Einregelung auf Basis des Nahbereich-Sensors 11 durchführen kann.

Es ist ferner optional möglich, mehrere Offset-Werte 24 vorab zu hinterlegen, um abhängig von der erfassten Höhenabstandsänderung einen der hinterlegten Offset-Werte auszuwählen. Anhand der Offset-Werte kann somit eine diskrete Vorsteuerung realisiert werden, um die Lage des Verteilgestänges an prognostizierte Höhenänderungen anzupassen. Die vorausschauende Anpassung mittels eines Offset-Wertes ist somit nicht direkt proportional zur erfassten vorausliegenden Höhenabstandsänderung, jedoch dafür schnell und robust.

In einer weiteren Variante ist die Steuereinrichtung 20 dazu ausgebildet, einen Zeitpunkt für die Erzeugung eines Stellsignals 31 zur zumindest teilweisen Kompensation der Reaktionszeit bei der Lagesteuerung in Abhängigkeit von der Fahrgeschwindigkeit 7 und/oder einer Gestängegeschwindigkeit in Fahrtrichtung festzulegen. Der Zeitpunkt wird näherungsweise so festgelegt, dass eine nach dem Zeitpunkt verbleibende Fahrzeit bis zum Erreichen der zweiten Messstelle M2 im Wesentlichen der Reaktionszeit entspricht. Hierzu kann in der Steuereinrichtung 20 die Reaktionszeit 28 hinterlegt sein, z. B. in einem Datenspeicher. Diese Funktionalität kann durch ein optionales Zeitsteuermodul 22c realisiert sein. Die Fahrgeschwindigkeit 7 kann durch einen üblichen Fahrgeschwindigkeitssensor 6 bereitgestellt werden.

Mit der vorliegenden Sensoreinrichtung 10 können jedoch sich ändernde Höhenabstände h1, h2, h3 des Verteilgestänges 2 zu der Zielfläche Z vorausschauend erfasst bzw. prognostiziert werden, durch Verwendung des Fernbereich-Sensors 12. Der Zeitpunkt für die Erzeugung eines Stellsignals 31 ist dabei bevorzugt so gewählt, dass er soweit vorausschaut, dass die Fahrzeit T_{F} bei aktueller Fahrgeschwindigkeit v0 bis zu der Stelle, an der die Anpassung der Gestängelage abgeschlossen ist, im Wesentlichen der Reaktionszeit T_{R} entspricht, d.h. T_{R} ≈ T_{F}= s/v₀. (vgl. Figur 2). Der Zeitpunkt für die Erzeugung eines Stellsignals 31 kann näherungsweise durch Festlegung des Zeitpunkts erfolgen, an dem das Höhenlage-Vorsteuermodul die Soll-Höhenlage 25 an den vorausschauend erfassten Höhenabstand anpasst. Bei langsamen Fahrgeschwindigkeiten kann somit der Zeitpunkt verzögert werden, damit die Höhenanpassung nicht zu früh erfolgt.

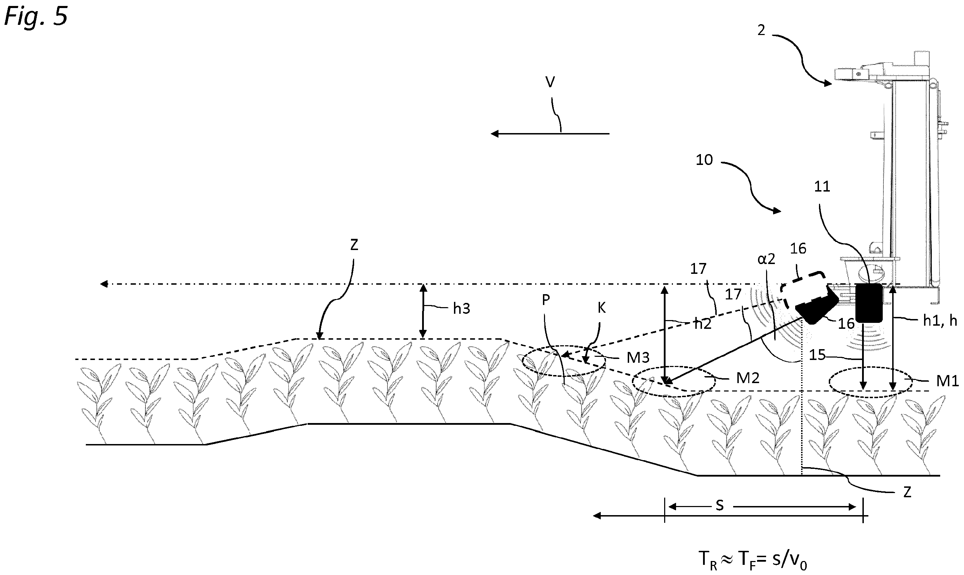

Figur 5 illustriert ein weiteres Ausführungsbeispiel einer Erfassung von sich verändernden Höhenabständen mit einem Nahbereich- und einem Fernbereich-Sensor.

Die Besonderheit dieses Ausführungsbeispiels liegt darin, dass eine Blickrichtung des Fernbereich-Sensors 16, der wiederum als Ultraschall-Sensor ausgeführt ist, zur Veränderung der Lage der zweiten Messstelle M2 veränderbar ist. Der Fernbereich-Sensor 16 ist zur Veränderung der Blickrichtung schwenkbar am Verteilgestänge 2 angeordnet. Der Fernbereich-Sensor 16 kann von der Steuereinrichtung 20 zur Veränderung seiner Schwenklage und damit Blickrichtung 17 ansteuerbar sein. Die Verschwenkung kann durch einen entsprechend von der Steuereinrichtung 20 ansteuerbaren Aktor erfolgen, der z. B. elektrisch betätigbar ist (nicht dargestellt).

Figur 5 zeigt den Fernbereich-Sensor in einer ersten Schwenklage, in der die Blickrichtung 17 auf die Messstelle M2 gerichtet ist. Figur 5 zeigt gestrichelt eine weitere mögliche Schwenklage, in der der Fernbereich-Sensor eine weitere nach vorne gerichtete Blickrichtung 17 aufweist, hier auf die Messstelle M3. In der zweiten Schwenklage ist der Winkel α2 der Blockrichtung 17 zur Vertikalen Z größer als in der ersten Schwenklage.

Die Steuereinrichtung 20 kann dazu ausgebildet sein, die Blickrichtung des Fernbereich-Sensors 16 abhängig von der Fahrgeschwindigkeit oder einer hiervon abgeleiteten Größe zu verändern, derart, dass die Blickrichtung 17 mit zunehmender Fahrgeschwindigkeit weiter nach vorne verändert wird. Besonders vorteilhaft ist eine Ausführung, bei der die Blickrichtung 17 des Fernbereich-Sensors 16 dynamisch auf eine vorausliegende Messstelle gerichtet wird, die so vom Verteilgestänge vorausliegend beabstandet ist, dass eine auf Basis der aktuellen Fahrgeschwindigkeit benötigte Fahrzeit bis zum Erreichen dieser Messstelle durch das Verteilgestänge im Wesentlichen der Reaktionszeit oder einer hiervon abgeleiteten Größe entspricht. Wenn z. B. die Reaktionszeit 0,5 s beträgt, wird quasi 0,5 s Fahrzeit nach vorne geschaut. Somit wird quasi eine Echtzeitmessung der Höhenlage / des Höhenabstands an dem Punkt ermöglicht, an dem eine Steuerung der Höhenlage erfolgt.

Mit anderen Worten ist die zweite Messstelle M2 und/oder die Blickrichtung 17 des Fernbereich-Sensors 12 bevorzugt so gewählt, dass er soweit vorausschaut, dass die Fahrzeit T_{F} bei aktueller Fahrgeschwindigkeit v0 bis zu der Stelle, an der die Anpassung der Gestängelage abgeschlossen ist, im Wesentlichen der Reaktionszeit T_{R} entspricht, d.h. T_{R} ≈ T_{F}= s/v₀.

Alternativ oder zusätzlich kann die Schwenklage 16 und damit die Blickrichtung 17 auch manuell verstellbar sein, z. B. von einem Arbeitsvorgang, bei der der Sensor an die voraussichtliche Fahrgeschwindigkeit vorab angepasst wird. Die weiteren Aspekte betreffend die Ausführungsvariante der Figur 5 können denen entsprechen, wie sie in den Figuren 2 bis 3B beschrieben sind, so dass hierauf verwiesen wird.

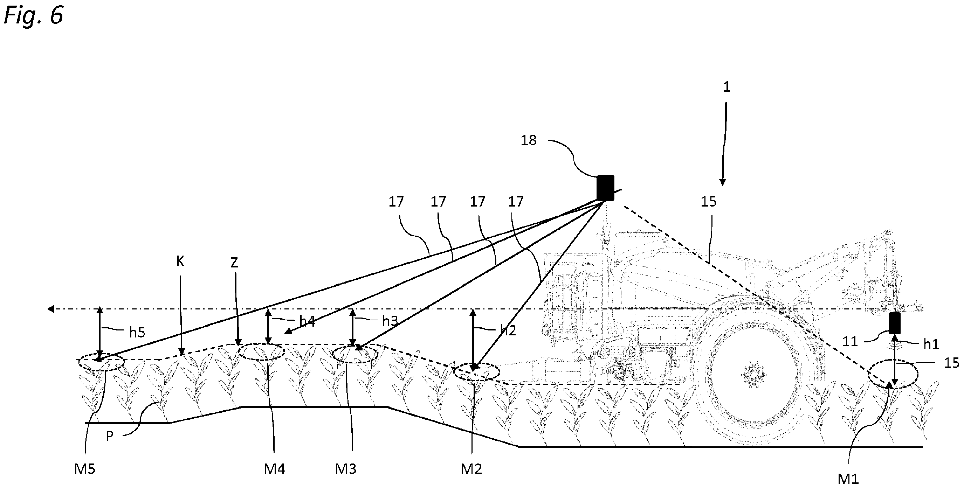

Figur 6 illustriert ein weiteres Ausführungsbeispiel einer Erfassung von sich verändernden Höhenabständen mit einem Nahbereich- und einem Fernbereich-Sensor.

Die Besonderheit dieses Ausführungsbeispiels liegt darin, dass der Fernbereich-Sensor nun als Radarsensor 18 ausgebildet ist. Der Radarsensor ist dazu ausgebildet, den Höhenabstand des Verteilgestänges 2 zur Zielfläche Z an mehreren Messstellen M2, M3, M4, M5, die in Fahrtrichtung voneinander beabstandet sind, gleichzeitig zu messen. Beispielsweise kann die Steuereinrichtung 20 dazu ausgebildet sein, abhängig von der Fahrgeschwindigkeit oder einer hiervon abgeleiteten Größe aus den mehreren Messstellen M2, M3, M4, M5 eine Messstelle auszuwählen. Bei langsamen Fahrgeschwindigkeiten kann z. B. die Messstelle M2 als die nächstliegende Messstelle verwendet werden, die in Fahrtrichtung vorausliegt. Je näher die Messstelle, desto genauer ist das Höhenprofil bestimmbar. Mit zunehmender Fahrgeschwindigkeit reicht die Reaktionszeit für eine Anpassung der Gestängelage nicht mehr aus, so dass zweckmäßig eine weiter vorausliegende Messstelle M3, M4, oder M5 ausgewählt wird.

Der Radarsensor-Sensor 18 ist hier am Trägerfahrzeug angeordnet. Der Radar-Sensor kann jedoch auch am Verteilgestänge angeordnet sein, z. B. an einer Stelle oberhalb des Nahbereich-Sensors 11. Die weiteren Aspekte dieser Ausführungsvariante können denen entsprechen, wie sie in den Figuren 2 bis 3B beschrieben sind.

In einer weiteren Ausführungsvariante kann der Radar-Sensor 18 zusätzlich als Nahbereich-Sensor verwendet werden, wenn eine seiner Messstellen auf den Bereich M1 unterhalb des Verteilgestänges 2 gerichtet ist, was in Figur 6 durch die gestrichelte Linie 15 dargestellt ist. In diesem Fall könnte optional auf einen separaten Nahbereich-Sensor 11 verzichtet werden. In diesem Fall ist es ferner besonders vorteilhaft, den Radarsensor direkt am Verteilgestänge 2, z. B. an einem oberen Bereich des Verteilgestänges, anzuordnen.

Weitere Anwendungsbeispiele und Ausführungsvarianten werden nachfolgend anhand der Figuren 7A bis 9B beschrieben.

Die vorliegende Technik zur vorausschauenden Erfassung von sich verändernden Höhenabständen des Verteilgestänges kann für unterschiedliche Lagesteuerungen des Verteilgestänges verwendet werden, wenn die Steuerung der Gestängelage von einer Abstandsmessung zur Zielfläche, z. B. zum Pflanzenbestand, abhängt.

Ein Beispiel hierfür ist die Höhenverstellung des gesamten Verteilgestänges, vorzugsweise anhand einer Höhenverstellung eines Mittelteils des Verteilgestänges. Die Stelleinrichtung 30 ist in diesem Fall die Stelleinrichtung 32, wie in Figur 1 beschrieben. Ein weiteres Beispiel ist die Verschwenkung des Verteilgestänges oder Teile hiervon um in Fahrtrichtung verlaufende Schwenkachsen.

Figur 7A zeigt eine schematische Perspektivansicht einer Verteilmaschine gemäß einer Ausführungsform der Erfindung, um die möglichen Schwenkachsen zu illustrieren.

Die vorliegende Technik zur vorausschauenden Erfassung von sich verändernden Höhenabständen des Verteilgestänges kann für die Steuerung der Schwenklage des Verteilgestänges 2, vorzugsweise des Mittelteils, um eine in Fahrtrichtung verlaufende Schwenkachse D, wie sie in Figur 7A illustriert ist, angewendet werden. Ein weiteres Beispiel ist die Verschwenkung, z. B. Anwinkelung, der Ausleger 3 relativ zueinander um die ebenfalls in Fahrtrichtung verlaufende Auslegerachse A. Ein weiteres Beispiel ist die Anwinkelung benachbarter Segmente 3a der Ausleger 3 um in Fahrtrichtung verlaufende Segmentachsen B.

Gemäß der in Figur 7A gezeigten Ausführungsform ist das Verteilgestänge 2 um eine in Fahrtrichtung verlaufende Schwenkachse D bewegbar an einem Trägerfahrzeug 5 der Verteilmaschine 2 mittelbar oder unmittelbar angeordnet. Die Verschwenkung des Verteilgestänges 2 um die Schwenkachse D erfolgt mittels einer Verschwenkung des Mittelteils 4 um die in Fahrtrichtung verlaufende Schwenkachse D. Hierzu ist eine weitere Stelleinrichtung vorgesehen, mittels der eine Stellkraft erzeugbar ist, um das Verteilgestänge 2 um die Schwenkachse D zu bewegen. Derartige Schwenkeinrichtungen zum Verschwenkung des Mittelteils 4 um die Achse D sind an sich aus dem Stand der Technik bekannt. Die Schwenkeinrichtung kann beispielsweise ausgeführt sein, wie in den Offenlegungsschriften DE 20 2007 011 631 U1, EP 2 591 657 A1, oder WO 2015/040133 A1 beschrieben und hierzu z. B. einen doppeltwirkenden oder zwei einfachwirkende fluidisch betätigbare Stellzylinder umfassen.

Ein mögliches Beispiel ist in Figur 8B dargestellt. Figur 8B zeigt eine Detailansicht eines mittleren Abschnitts 4 des Verteilgestänges 2 gemäß einer möglichen Ausführungsform. Das Verteilgestänge 2 ist über einen Schwenkrahmen an einer Tragstruktur der Verteilmaschine gelagert. Die Tragstruktur kann beispielsweise ein höhenverstellbarer Hubrahmen 33 sein, um das Verteilgestänge in seiner Höhenposition zu verändern (siehe Figur 8A).

Der Schwenkrahmen umfasst einen Horizontalträger, sowie eine am Horizontalträger befestigte Kugelgelenkhalterung, die über ein Kugelgelenk (nicht dargestellt) im Bereich der Schwenkachse D an der Tragstruktur gealtert ist. Die Kugelgelenkhalterung 37 ist vorliegend lediglich beispielhaft in Form zweier symmetrischer flügelförmiger Halteplatten ausgeführt. Das Kugelgelenk ermöglicht eine Verschwenkung des Verteilgestänges 20 um eine in Fahrtrichtung verlaufende Schwenkachse D, sowie um eine Vertikalachse, so dass das Verteilgestänge 20 auch in Horizontalrichtung verschwenkbar ist. Der Horizontalträger ist gleichzeitig Teil einer Parallelogrammaufhängung, mittels der der mittlere Abschnitt des Verteilgestänges am Schwenkrahmen gehaltert ist.

Der Schwenkrahmen ist mittels der Stelleinrichtung 38 um die Achse D verschwenkbar. Eine Schwenkbewegung des Schwenkrahmens führt zu einer Schwenkbewegung des gesamten Verteilgestänges 20 um die Achse D. Die Stelleinrichtung 38 umfasst zwei hydraulisch arbeitende Stellelemente (Stellzylinder). Zur Kopplung des Schwenkrahmens mit den Stellzylindern 38 weist der Schwenkrahmen ferner eine nach unten ragende V-förmige Halterung auf (in Figur 8B verdeckt). Die Stellzylinder 38 sind symmetrisch auf gegenüberliegenden Seiten - in Fahrtrichtung V gesehen - der Halterung und der Schwenkachse D angeordnet und jeweils an einem Endabschnitt an der nach unten ragenden Halterung befestigt. Mit ihrem anderen Endabschnitt sind die Stellzylinder 38 an der Tragstruktur 33 zur Abstützung befestigt. Ein Ausfahren eines der Stellzylinder 38 und gleichzeitiges Einfahren des anderen Stellzylinders 38 führt zu einer Schwenkbewegung des Schwenkrahmens relativ zum Trägerfahrzeug um die in Fahrtrichtung F verlaufende Schwenkachse D. Dies führt zu einer korrespondierenden Schwenkbewegung des gesamten Verteilgestänges 20 in einer Ebene senkrecht zur Fahrtrichtung.

Beispielsweise ist die Steuereinrichtung 20 dazu ausgebildet, bei einem Ausbringvorgang von Material durch Regelung der Schwenklage des Verteilgestänges 20 um die Schwenkachse D einen Abstand zwischen einer Oberkante des Bestandes und den Ausbringmitteln konstant auf einen definierten Abstand zu regeln und hierzu entsprechend Steuersignale 31 für die Ansteuerung bzw. Regelung der Stellzylinder 38 zu erzeugen. Anhand der Sensoreinrichtung 10, die dazu ausgebildet ist, sich ändernde Höhenabstände h des Verteilgestänges 2 zu der Zielfläche Z vorausschauend zu erfassen, können von der Steuereinrichtung 20 vorteilhaft frühzeitig Stellsignale 31 zur Steuerung der Schwenklage um die Schwenkachse D erzeugt werden.

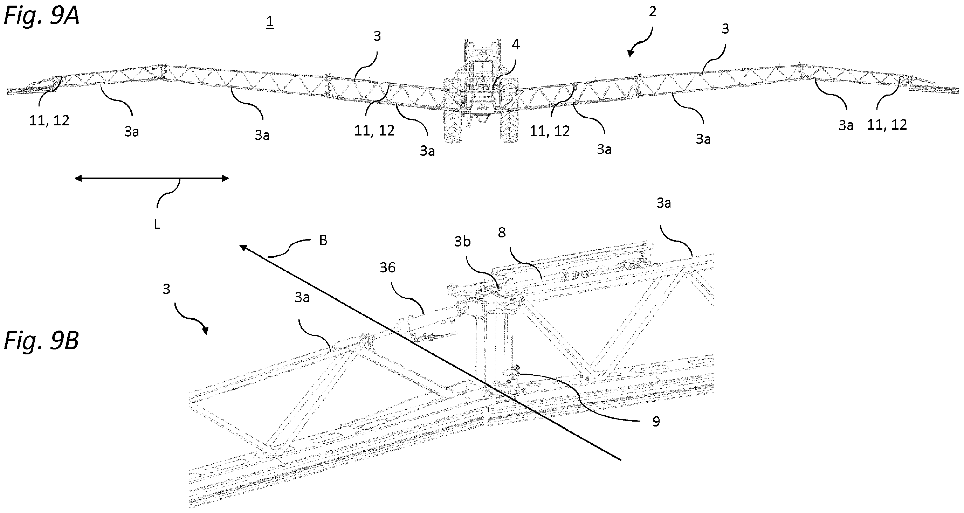

Vorstehend wurde bereits erwähnt, dass zur Lagesteuerung des Verteilgestänges 2 das Verteilgestänge 2, die Ausleger 3 und optional ferner einzelne Segmente 3a der Ausleger 3 um in Fahrtrichtung V verlaufende horizontale Achsen (Auslegerachsen A, Segmentachsen B) verschwenkbar sind, was an sich aus dem Stand der Technik bekannt ist und nachfolgend in Zusammenhang mit den Figuren 9A bis 9B noch näher erläutert wird.

Die Figur 9A zeigt ein Verteilgestänge 2, umfassend zwei seitliche Ausleger 3 und ein Mittelteil 4, wobei die seitlichen Ausleger 3 jeweils um eine in Fahrtrichtung verlaufende Achse A verschwenkbar am Mittelteil 4 des Verteilgestänges 2 gehaltert sind (vgl. auch Figur 7A). Die Ausleger 3 können somit zueinander angewinkelt werden, was in Figur 9A illustriert ist, die eine leicht angewinkelte Stellung zeigt. Beide Ausleger 3 sind am Mittelteil 4 leicht nach oben verschwenkt.

Die Ausleger 3 setzen sich ferner jeweils aus drei, wiederum um in Fahrtrichtung verlaufende Achsen B (vgl. auch Figur 7A) schwenkbar zueinander angeordneten Segmenten 3a zusammen. Somit können auch zueinander benachbarte Segmente 3a relativ zueinander angewinkelt werden. Dies bedeutet, dass die Ausleger jeweils, in Längserstreckungsrichtung L der Ausleger gesehen, durch mehrere durch Gelenke 3b verbundene Segmente 3a zusammengesetzt sind.

Dies ist in der Detailansicht der Figur 9B gezeigt. Zwei benachbarte durch Gelenke 3b verbundene Segmente (Gestängeabschnitte) 3a umfassen ein inneres und äußeres Segment 3a (Gestängeabschnitt) in Bezug auf das Mittelteil. Die ansteuerbare Stelleinrichtung 30 umfasst gemäß dieser Ausführungsvariante zusätzlich Stellelemente 36, mittels derer die Segmente um die in Fahrtrichtung verlaufenden Achsen (Segmentachsen) B verschwenkbar sind. Die Stellelemente 36 sind als hydraulische Stellzylinder ausgeführt. Anders ausgedrückt ist ein solches zusätzliches von der Steuereinrichtung 20 ansteuerbares Stellelement 36 jeweils zwei benachbarten Segmenten 3a und/oder dem Gelenk 3b, das die Segmentachse B bildet, zugeordnet. Entsprechend können benachbarte Segmente 3a zueinander angewinkelt werden, um eine eigene Höhenlage für die einzelnen Segmente 3a einzustellen.

Dies ist besonders vorteilhaft zur individuellen Anpassung eines Höhenabstands jedes Auslegers 3 und/oder von einzelnen Segmenten 3a an eine - in Längserstreckungsrichtung L des Verteilgestänges gesehenen - unebene Zielfläche.

Die vorliegende Technik zur vorausschauenden Erfassung von sich verändernden Höhenabständen des Verteilgestänges kann somit ferner auch vorteilhaft für eine derartige Lagesteuerung der Ausleger 3 und/oder der Segmente 3a verwendet werden, d. h. eine Lagesteuerung, insbesondere eine Höhensteuerung, die eine Anwinkelung der Ausleger relativ zueinander und/oder der Anwinkelung benachbarter Segmente zueinander abhängig von den vorausschauend erfassten, sich ändernden Höhenabständen umfasst.

Anhand der Sensoreinrichtung 10, die dazu ausgebildet ist, sich ändernde Höhenabstände h des Verteilgestänges 2 zu der Zielfläche Z vorausschauend zu erfassen, können vorteilhaft frühzeitig Stellsignale 31 zur Steuerung der Schwenklage um die Schwenkachse A erzeugt werden.

Hierzu umfasst die Sensoreinrichtung 10 pro Ausleger 3 oder an mindestens zwei Segmenten 3a pro Ausleger 3 jeweils mindestens einen am jeweiligen Ausleger oder Segment angeordneten Nahbereich-Sensor 11, der dazu ausgebildet ist, Ist-Werte zum Höhenabstand des Verteilgestänges zur Zielfläche zu erfassen und/oder eine Ist-Kontur der Zielfläche abzutasten, und ferner mindestens einen am jeweiligen Ausleger oder Segment angeordneten Fernbereich-Sensor 12, der dazu ausgebildet ist, vorausliegende Werte zum Höhenabstand zu erfassen und/oder eine vorausliegende Kontur der Zielfläche abzutasten. Im Beispiel der Figur 9A sind pro Ausleger 3 jeweils am ganz äußeren Segment 3a als auch am innersten Segment 3a sowohl ein Nahbereich-Sensor 11 als auch ein Fernbereich-Sensor 12 angeordnet.

Dies bietet den Vorteil, dass auslegerspezifisch oder auch für einzelne Segmente 3a jedes Auslegers sowohl ein Ist-Höhenabstand (mittels des Nahbereich-Sensors) als auch eine vorausliegende Höhenänderung vorausschauend erfasst werden können. Entsprechend wird eine schnelle, aber auch präzise Lagesteuerung in Bezug auf Höhenabstände ermöglicht. Systembedingte Reaktionszeiten können vorteilhaft zumindest teilweise kompensiert werden. Gemäß diesen Ausführungsvarianten ergeben sich somit mehrere Paare aus jeweils einem Nahbereich-Sensor 11 und einem Fernbereich-Sensor 12, die in Längserstreckungsrichtung des Verteilgestänges gesehen, beabstandet voneinander angeordnet sind. Die Fernbereich-Sensoren 12 und Nahbereich-Sensoren 11 können ausgebildet sein, wie es vorstehend bereits beschrieben wurde. Insofern wird diesbzgl. auf die vorstehenden Ausführungen hierzu verwiesen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Landwirtschaftliche Verteilmaschine
- 2: Verteilgestänge
- 3: Ausleger
- 3a: Auslegersegment
- 3b: Gelenk
- 4: Mittelteil
- 5: Trägerfahrzeug
- 6: Geschwindigkeitssensor z. B. für Fahrgeschwindigkeit, Gestängegeschwindigkeit
- 7: Fahrgeschwindigkeit
- 8: Klappzylinder
- 9: Winkellagegeber
- 10: Sensoreinrichtung
- 11: Nahbereich-Sensor
- 12: Fernbereich-Sensor
- 13: Messdaten zum Ist-Höhenabstand (von Nahbereich-Sensor, erster Messstelle),
- 14: Messdaten zum vorausliegenden Höhenabstand (von Fernbereich-Sensor, zweiter Messstelle)
- 15: Blickrichtung
- 16: Verschwenkbarer Sensor
- 17: Blickrichtung
- 18: Radarsensor
- 20: Steuereinrichtung
- 21: Höhenlagen-Regelmodul
- 22: Höhenlage-Vorsteuermodul
- 22a: Modul zur Bestimmung Konturänderung
- 22b: Modul zur Bestimmung Änderung Soll-Höhenlage
- 22c: Modul Zeitsteuerung
- 23: Kalibiermodul
- 24: Offset
- 25: Soll-Höhenlage
- 26: Erster Betriebsmodus
- 27: Zweier Betriebsmodus
- 28: Hinterlegte Reaktionszeiten
- 30: Stelleinrichtung
- 31: Stellsignal
- 32: Stelleinrichtung zur Höhenverstellung Mittelteil
- 33: Hubrahmen
- 34: Parallelogrammgestänge
- 35: Stellzylinder
- 36: Stellelement, Stellzylinder
- 37: Kugelgelenkhalterung
- 38: Stellelement, Stellzylinder
- h: Höhenlage, Höhenabstand
- h1: Ist-Höhenabstand
- h2, h3, h4, h5: Vorausliegender Höhenabstand
- A: Auslegerachse
- B: Segmentachse
- D: Schwenkachse Mittelteil
- P: Pflanzenbestand
- Z: Zielfläche
- K: Kontur der Zielfläche
- L: Längserstreckungsrichtung des Verteilgestänges
- V: Fahrtrichtung
- Z: Vertikale
- M1, M2, M3, M4, M5: Messstelle
- S: Gestängeschwingung
- α1: Neigungswinkel der Blickrichtung zur Vertikalen
- α2: Neigungswinkel der Blickrichtung zur Vertikalen

## Patentansprüche

1. Landwirtschaftliche Verteilmaschine (1), vorzugsweise eine Feldspritze oder ein pneumatischer Düngerstreuer, umfassend
a) ein Verteilgestänge (2) zum Ausbringen von Material, wie Düngemittel, Pflanzenschutzmittel oder Saatgut, umfassend zwei seitliche Ausleger (3), die jeweils eine Mehrzahl von Ausbringelementen zum Ausbringen des Materials aufweisen;
b) eine ansteuerbare Stelleinrichtung (30) zur Veränderung einer Lage des Verteilgestänges (2) relativ zu einer zu bearbeitenden landwirtschaftlichen Zielfläche (Z);
c) eine Sensoreinrichtung (10), die dazu ausgebildet ist, sich ändernde Höhenabstände (h) des Verteilgestänges (2) zu der Zielfläche (Z) und/oder vorausliegende Konturänderungen der Zielfläche vorausschauend zu erfassen und vorzugsweise den Höhenabstand (h) des Verteilgestänges zu der Zielfläche (Z) an unterschiedlichen Messstellen (M1, M2), die in Fahrtrichtung (V) voneinander beabstandet sind, zu erfassen; und
d) eine Steuereinrichtung (20), die dazu ausgebildet ist, zur Lagesteuerung, vorzugsweise zur Höhensteuerung, des Verteilgestänges (2) Stellsignale (31) für die Stelleinrichtung (30) abhängig von den vorausschauend erfassten, sich ändernden Höhenabständen (h) und/oder Konturänderungen zu erzeugen, vorzugsweise um eine Reaktionszeit bei der Lagesteuerung zumindest teilweise zu kompensieren.

2. Landwirtschaftliche Verteilmaschine (1) nach Anspruch 1, wobei die Sensoreinrichtung (10) umfasst:
a) einen Nahbereich-Sensor (11), der dazu ausgebildet ist, an einer ersten Messstelle (M1) Ist-Werte (h1) zum Höhenabstand des Verteilgestänges zur Zielfläche zu erfassen und/oder eine Ist-Kontur der Zielfläche abzutasten; und/oder
b) einen Fernbereich-Sensor (12; 16; 18), der dazu ausgebildet ist, an einer zweiten Messstelle (M2) vorausliegende Werte (h2) zum Höhenabstand zu erfassen und/oder eine vorausliegende Kontur der Zielfläche abzutasten,
wobei die zweite Messstelle (M2) - in Fahrtrichtung gesehen - zumindest teilweise vor der ersten Messstelle (M1) liegt.

3. Landwirtschaftliche Verteilmaschine (1) nach Anspruch 2, wobei
a) der Nahbereich-Sensor (11) und/oder der Fernbereich-Sensor (12; 16) als Ultraschallsensor ausgeführt sind, und/oder
b) der Nahbereich-Sensor (11) und/oder der Fernbereich-Sensor (12) am Verteilgestänge (2) angeordnet sind, vorzugsweise an der gleichen Stelle am Verteilgestänge übereinander oder nebeneinander angeordnet sind; und/oder
c) der Fernbereich-Sensor (12) eine im Vergleich zum Nahbereich-Sensor (11) weiter nach vorne auf die Zielfläche orientierte Blickrichtung aufweist; und/oder
d) der Nahbereich-Sensor (11) eine nach unten orientierte Blickrichtung (15) aufweist, die einen Winkel (α1) zu einer Vertikalen (Z) bildet, der im Bereich von 0° bis 60°, vorzugsweise von 0° bis 20° liegt, und der Fernbereich-Sensor (12) eine schräg nach vorne orientierte Blickrichtung (16) aufweist, die im Vergleich zur Blickrichtung des Nahbereich-Sensors weiter nach vorne gerichtet ist.

4. Landwirtschaftliche Verteilmaschine (1) nach einem der Ansprüche 2 oder 3, wobei die Steuereinrichtung (20) dazu ausgebildet ist,
a) abhängig von den vom Fernbereich-Sensor (12; 16; 18) erfassten Messwerten vorausschauend eine Höhenabstandsänderung oder eine hiervon abgeleitete Größe zu bestimmen, welche angibt, ob der Höhenabstand des Verteilgestänges (2) zur Zielfläche (Z) im Vergleich zum aktuellen Höhenabstand gleichbleibt, sich verringert oder sich erhöht, und/oder
b) bevor das Verteilgestänge (2) die zweite Messstelle (M2) erreicht, ein Stellsignal (31) für die Stelleinrichtung (30) abhängig von der bestimmten Höhenabstandsänderung oder der hiervon abgeleiteten Größe zu erzeugen, vorzugsweise zur Anpassung der Lage des Verteilgestänges (2) an die Höhenabstandsänderung.

5. Landwirtschaftliche Verteilmaschine (1) nach einem der Ansprüche 2 bis 4, wobei die Steuereinrichtung (20) dazu ausgebildet ist, abhängig von den vom Nahbereich-Sensor (11) erfassten Messwerten eine Abweichung des Ist-Höhenabstands (h1) des Verteilgestänges (2) zur Zielfläche (Z) von einem Soll-Höhenabstand zu bestimmen und abhängig hiervon Stellsignale für die Stelleinrichtung (30) zur Einregelung des Ist-Höhenabstands auf den Soll-Höhenabstand zu erzeugen.

6. Landwirtschaftliche Verteilmaschine (1) nach einem der Ansprüche 2 bis 5, wobei die Steuereinrichtung (20) dazu ausgebildet ist, Messdaten (14) des Fernbereich-Sensors (12; 16; 18) zu einem Zeitpunkt t anhand von Messdaten (13) des Nahbereich-Sensors (11) zu einem Zeitpunkt t+x zu überprüfen und vorzugsweise zu kalibrieren, wobei t+x der Zeit entspricht, zu der die erste Messstelle (M1) die Lage der zweiten Messstelle (M2) im aktuellen Fahrbetrieb erreicht.

7. Landwirtschaftliche Verteilmaschine (1) nach Anspruch 6, wobei die Steuereinrichtung (20) dazu ausgebildet ist, falls die Überprüfung eine Abweichung eines mittels der Messdaten des Fernbereich-Sensors (12; 16; 18) zum Zeitpunkt t ermittelten Höhenabstands zu einem mittels der Messdaten des Nahbereich-Sensors (11) zum Zeitpunkt t+x ermittelten Höhenabstand ergibt, diese Abweichung als Offset (24) oder Korrekturwert für die Messdaten des Fernbereich-Sensors (12; 16; 18) einzustellen und vorzugsweise den Offset (24) oder Korrekturwert fortlaufend anzupassen.

8. Landwirtschaftliche Verteilmaschine (1) nach einem der Ansprüche 2 bis 7, wobei der Fernbereich-Sensor zur Umfelderkennung ausgebildet ist, vorzugsweise zur Erkennung von Hindernissen und/oder Feldgrenzen ausgebildet ist, wobei der Fernbereich-Sensor vorzugsweise als Radarsensor (18) ausgebildet ist.

9. Landwirtschaftliche Verteilmaschine (1) nach einem der Ansprüche 2 bis 8, wobei eine Blickrichtung des Fernbereich-Sensors (16; 18) zur Veränderung der Lage der zweiten Messstelle (M2) oder zur Auswahl einer anderen Messstelle als zweite Messstelle (M2) veränderbar ist, vorzugsweise automatisiert veränderbar ist.

10. Landwirtschaftliche Verteilmaschine (1) nach einem der vorherigen Ansprüche, wobei der Fernbereich-Sensor (16) nach Anspruch 2 zur Veränderung der Blickrichtung schwenkbar am Verteilgestänge (2) angeordnet ist.

11. Landwirtschaftliche Verteilmaschine (1) nach einem der Ansprüche 2 bis 10, wobei die 10Steuereinrichtung (20) dazu ausgebildet ist, eine Blickrichtung des Fernbereich-Sensors (16; 18) abhängig von der Fahrgeschwindigkeit oder einer hiervon abgeleiteten Größe zu verändern, derart, dass die Blickrichtung (17) mit zunehmender Fahrgeschwindigkeit weiter nach vorne verändert wird.

12. Landwirtschaftliche Verteilmaschine (1) nach einem der Ansprüche 2 bis 11, wobei die Steuereinrichtung (20) dazu ausgebildet ist, eine Blickrichtung (17) des Fernbereich-Sensors (16; 18) dynamisch auf eine vorausliegende Messstelle (M2) zu richten, die so vom Verteilgestänge (2) vorausliegend beabstandet ist, dass eine auf Basis der aktuellen Fahrgeschwindigkeit benötigte Fahrzeit bis zum Erreichen dieser Messstelle durch das Verteilgestänge (2) im Wesentlichen der Reaktionszeit oder einer hiervon abgeleiteten Größe entspricht.

13. Landwirtschaftliche Verteilmaschine (1) nach einem der vorherigen Ansprüche, wobei die Sensoreinrichtung (10) einen Radarsensor (18) umfasst, der dazu ausgebildet ist, den Höhenabstand des Verteilgestänges zur Zielfläche (Z) an mehreren Messstellen (M2, M3, M4, M5), die in Fahrtrichtung voneinander beabstandet sind, zu messen, wobei vorzugsweise die Steuereinrichtung (20) dazu ausgebildet ist, abhängig von der Fahrgeschwindigkeit oder einer hiervon abgeleiteten Größe aus den mehreren Messstellen (M2, M3, M4, M5) eine oder mehrere Messstelle(n) auszuwählen.

14. Landwirtschaftliche Verteilmaschine (1) nach einem der vorherigen Ansprüche, wobei die Steuereinrichtung dazu ausgebildet ist, in Reaktion auf die von der Sensoreinrichtung vorausschauend erfassten Höhenabstände und/oder Konturänderungen Stellsignale für ein Anheben des Verteilgestänges und/oder der Ausleger des Verteilgestänges nach oben früher im Vergleich zu Stellsignale für ein Absenken des Verteilgestänges und/oder der Ausleger nach unten festzulegen.

15. Landwirtschaftliche Verteilmaschine (1) nach einem der vorherigen Ansprüche, wobei die Lagesteuerung des Verteilgestänges (2) eine Höhenverstellung eines Mittelteils (4) des Verteilgestänges (2), an dem die seitlichen Ausleger (3) gehaltert sind, umfasst und die Stelleinrichtung (30) eine Stelleinrichtung (32) zur Höhenverstellung des Mittelteils (4) umfasst.

16. Landwirtschaftliche Verteilmaschine (1) nach Anspruch 15, wobei das Mittelteil (4) zur Einstellung seines Höhenabstands gegenüber einer zu einer zu bearbeitenden landwirtschaftlichen Zielfläche (Z), vorzugsweise einem Pflanzenbestand, höhenverstellbar an einem Trägerfahrzeug (5) der landwirtschaftlichen Verteilmaschine (1) gehaltert ist, wobei die Stelleinrichtung (32) zur Höhenverstellung des Mittelteils (4) einen höhenverstellbaren Hubrahmen (33), der z. B. durch ein Parallelogrammgestänge (34) oder einen Linearschlitten höhenverstellbar am Trägerfahrzeug (5) gehaltert ist, umfasst.

17. Landwirtschaftliche Verteilmaschine (1) nach einem der vorherigen Ansprüche,
a) wobei das Verteilgestänge (2) zwei seitliche Ausleger (3) und ein Mittelteil (4), die jeweils eine Mehrzahl von Ausbringelementen zum Ausbringen des Materials aufweisen, umfasst, wobei die seitlichen Ausleger (3) jeweils um eine in Fahrtrichtung verlaufende Achse (A) verschwenkbar am Mittelteil (4) des Verteilgestänges (2) gehaltert sind, wobei vorzugsweise die Ausleger (3) sich jeweils aus zwei oder mehr, wiederum um in Fahrtrichtung verlaufende Achsen (B) schwenkbar zueinander angeordneten Segmenten (3a) zusammensetzen;
b) wobei die Stelleinrichtung (30) zur Veränderung einer Lage des Verteilgestänges (2) mehrere Stellelemente (36) umfasst, mittels derer die Ausleger (3) und/oder die Segmente (3a) der Ausleger (3) um die in Fahrtrichtung verlaufenden Achsen (A) verschwenkbar sind;
c) wobei die von der Steuereinrichtung (20) erzeugte Lagesteuerung des Verteilgestänges (2) eine Steuerung der Schwenklage der Ausleger (3) und/oder der Segmente (3a) der Ausleger (3) um die in Fahrtrichtung verlaufenden Achsen (A, B) umfasst.

18. Landwirtschaftliche Verteilmaschine (1) nach einem der vorherigen Ansprüche, wobei die Sensoreinrichtung (10) dazu ausgebildet ist, für jeden der Ausleger und/oder für unterschiedliche Segmente (3a) jedes Auslegers (3)
a) jeweils sich ändernde Höhenabstände (h) zur Zielfläche (Z) vorausschauend zu erfassen; und/oder
b) jeweils den Höhenabstand (h) des Auslegers und/oder des Segments zur Zielfläche (Z) an unterschiedlichen Messstellen (M1, M2), die in Fahrtrichtung (V) voneinander beabstandet sind, zu erfassen.

19. Landwirtschaftliche Verteilmaschine (1) nach einem der vorherigen Ansprüche, wobei die Sensoreinrichtung (10) zur vorausschauenden Erfassung von sich jeweils verändernden Höhenabständen der beiden Ausleger (3) und/oder von unterschiedlichen Segmenten (3a) der Ausleger (3)
a) Sensoren (11, 12) an jedem Ausleger (3), vorzugsweise Sensoren (11, 12) an mindestens zwei unterschiedlichen Segmenten (3a) pro Ausleger (3), umfasst; und/oder
b) hierzu mehrere Sensoren (10) umfasst, die - in Längserstreckungsrichtung (L) des Verteilgestänges gesehen - beabstandet zueinander am Verteilgestänge (3) angeordnet sind.

20. Landwirtschaftliche Verteilmaschine (1) nach einem der vorherigen Ansprüche, wobei die Sensoreinrichtung (10) pro Ausleger (3) oder an mindestens zwei Segmenten pro Ausleger jeweils
a) mindestens einen am jeweiligen Ausleger oder Segment angeordneten Nahbereich-Sensor (11) umfasst, der dazu ausgebildet ist, Ist-Werte (h1) zum Höhenabstand des Verteilgestänges zur Zielfläche zu erfassen und/oder eine Ist-Kontur der Zielfläche abzutasten; und
b) mindestens einen am jeweiligen Ausleger oder Segment angeordneten Fernbereich-Sensor (12; 16; 18) umfasst, der dazu ausgebildet ist, vorausliegende Werte (h2) zum Höhenabstand zu erfassen und/oder eine vorausliegende Kontur der Zielfläche abzutasten.

21. Landwirtschaftliche Verteilmaschine (1) nach Anspruch 19 oder 20, wobei die Steuereinrichtung (20) dazu ausgebildet ist, bei Kurvenfahrten und vorzugsweise bei Überschreiten einer vorbestimmten Fahrgeschwindigkeit, für die Höhensteuerung des kurveninnenseitig gelegenen Auslegers (3) dessen mindestens einen Nahbereich-Sensor (11) zu verwenden und für die Höhensteuerung des kurvenaußenseitig gelegenen Auslegers (3) dessen mindestens einen Fernbereich-Sensor (12; 16) zu verwenden.

22. Landwirtschaftliche Verteilmaschine (1) nach einem der vorherigen Ansprüche, insbesondere nach Anspruch 17, wobei die Lagesteuerung des Verteilgestänges (2) eine Steuerung von Segmenten (3a) der Ausleger (3) um die in Fahrtrichtung verlaufende Achsen (A) umfasst, vorzugsweise zur individuellen Anpassung eines Höhenabstands der Segmente an eine - in Längserstreckungsrichtung des Verteilgestänges gesehen - unebene Zielfläche (Z).

23. Landwirtschaftliche Verteilmaschine (1) nach einem der vorherigen Ansprüche, insbesondere nach Anspruch 22, wobei die Steuereinrichtung dazu ausgebildet ist, in Reaktion auf die von der Sensoreinrichtung vorausschauend erfassten Höhenabstände und/oder Konturänderungen Stellsignale für ein für ein Anwinkeln von Segmenten der Ausleger des Verteilgestänges nach oben früher im Vergleich zu Stellsignalen für ein für ein Anwinkeln von Segmenten der Ausleger des Verteilgestänges nach unten festzulegen.

24. Landwirtschaftliche Verteilmaschine (1) nach einem der vorherigen Ansprüche, wobei
a) das Verteilgestänge (2) um eine in Fahrtrichtung verlaufende Schwenkachse (D) bewegbar an einem Trägerfahrzeug (5) der Verteilmaschine (1) mittelbar oder unmittelbar angeordnet ist,
b) die Lagesteuerung des Verteilgestänges (2) eine Verschwenkung des Verteilgestänges (2) um eine in Fahrtrichtung verlaufende Schwenkachse (D) umfasst, vorzugsweise eine Verschwenkung eines Mittelteils (4) des Verteilgestänges (2), an dem die seitlichen Ausleger (3) gehaltert sind, um die in Fahrtrichtung verlaufende Schwenkachse (D) umfasst; und
c) die Stelleinrichtung (30) eine Stelleinrichtung umfasst, mittels der eine Stellkraft erzeugbar ist, um das Verteilgestänge (2) um die Schwenkachse (D) zu bewegen.

25. Verfahren zur Lagesteuerung eines Verteilgestänges (2) einer landwirtschaftlichen Verteilmaschine (1), vorzugsweise einer Feldspritze oder eines pneumatischen Düngerstreuers, wobei die Verteilmaschine (1) ein Verteilgestänge (2) zum Ausbringen von Material, wie Düngemittel, Pflanzenschutzmittel oder Saatgut, umfasst, aufweisend zwei seitliche Ausleger (3), die jeweils eine Mehrzahl von Ausbringelementen zum Ausbringen des Materials aufweisen,
wobei das Verfahren die Schritte umfasst:
a) Vorausschauendes Erfassen von sich verändernden Höhenabständen (h) des Verteilgestänges (2) zu einer zu bearbeitenden landwirtschaftlichen Zielfläche (Z) mit einer Sensoreinrichtung (10), vorzugsweise mittels derer der Höhenabstand (h) des Verteilgestänges (2) an unterschiedlichen Messstellen (M1, M2), die in Fahrtrichtung (V) voneinander beabstandet sind, gemessen wird; und
b) abhängig von den vorausschauend erfassten, sich verändernden Höhenabständen, Erzeugen von Stellsignalen (31) für eine Stelleinrichtung (30) zur Veränderung einer Lage des Verteilgestänges (2) relativ zur Zielfläche (Z), wobei eine Reaktionszeit bei der Lagesteuerung des Verteilgestänges (2) zumindest teilweise kompensiert wird, in dem die Stellsignale (31) erzeugt werden, bevor das Verteilgestänge (2) die sich verändernden Höhenabstände erreicht.
